# EUROPEAN PATENT SPECIFICATION

(11) **EP 1 032 576 B1**
(45) Date of publication and mention of the grant of the patent: **16.01.2008**
(21) Application number: 98910669.5
(22) Date of filing: 14.02.1998
(51) Int. Cl.: C07F 5/02, C08F 4/52, C08F 2/48

(54) **PHOTOACTIVATABLE NITROGEN-CONTAINING BASES BASED ON ALPHA-AMMONIUM KETONES, IMINIUM KETONES OR AMIDINIUM KETONES AND ARYL BORATES**
PHOTOAKTIVIERBARE STCIKSTOFFHALTIGE BASEN AUF DER GRUNDLAGE VON ALPHA-AMMONIUMKETONEN, IMINIUMKETONEN ODER AMIDINIUMKETONEN UND ARYLBORATEN
BASES CONTENANT DE L'AZOTE POUVANT ETRE ACTIVEES, A BASE DE CETONE ALPHA-AMMONIUM; DE CETONES D'IMINIUM OU DE CETONES D'AMIDINIUM ET DE BORATES D'ARYLE

(30) Priority: 26.02.1997 CH 44497
(43) Date of publication of application: 06.09.2000
(73) Proprietor: Ciba Specialty Chemicals Holding Inc., 4057 Basel (CH)
(72) Inventor: HALL-GOULLE, Véronique, CH-4153 Reinach (CH); TURNER, Sean, Colm, Berkeley, CA 94705 (US); CUNNINGHAM, Allan, Francis, Somers, NY 10589 (US)
(86) International application number: PCT/EP1998/000846
(87) International publication number: WO 1998/038195

(56) References cited:
- EP-A- 0 377 321
- PATENT ABSTRACTS OF JAPAN vol. 098, no. 001, 30 January 1998 & JP 09 241614 A (TOYO INK MFG. CO., LTD.), 16 September 1997,
- DATABASE WPI Week 9812 Derwent Publications Ltd., London, GB; AN 98-126164 XP002070435 & JP 10 007 709 A (TOYO INK. MFG. CO., LTD.) 13 January 1998
- DATABASE WPI Week 9811 Derwent Publications Ltd., London, GB; AN 98-114813 XP002070436 & JP 10 001 508 A (TOYO INK. MFG. CO., LTD.) 6 January 1998
- DATABASE WPI Week 9808 Derwent Publications Ltd., London, GB; AN 98-082667 XP002070437 & JP 09 316 117 A (TOYO INK MFG. CO., LTD.) 9 December 1997
- PATENT ABSTRACTS OF JAPAN vol. 098, no. 001, 30 January 1998 & JP 09 227854 A (TOYO INK. MFG. CO., LTD.), 2 September 1997,
- PATENT ABSTRACTS OF JAPAN vol. 098, no. 002, 30 January 1998 & JP 09 263063 A (TOYO INK MFG. CO., LTD.), 7 October 1997,
- PATENT ABSTRACTS OF JAPAN vol. 095, no. 006, 31 July 1995 & JP 07 070068 A (TOYO INK. MFG. CO., LTD.), 14 March 1995,
- PATENT ABSTRACTS OF JAPAN vol. 095, no. 006, 31 July 1995 & JP 07 070221 A (TOYO INK. MFG. CO., LTD.), 14 March 1995,
- DATABASE WPI Week 9810 Derwent Publications Ltd., London, GB; AN 98-105135 XP002070438 & JP 09 328 507 A (TOYO INK. MFG., CO.) 22 December 1997
- M. KO ET AL.: "Photopolymerization of Vinyl Monomers with Quaternary Ammonium Salts" J. POLYM. SCI., POLYM. CHEM. ED., vol. 12, no. 12, 1974, pages 2943-2951, XP002070431 cited in the application
- A. MEJIRITSKI ET AL.: "Novel Photoimaging System Based on Photoinduced Electron Transfer in Polymers Containing Pendant Benzophenone-Borate Salts" CHEM. MATER., vol. 8, 1996, pages 1360-1362, XP002070444 cited in the application
- S. A. LAPSHIN ET AL.: "Imidazolium salts. Dissociation processes in N-phenacylimidazolium salts in nonaqueous media" J. ORG. CHEM. USSR (ENGL. TRANSL.), vol. 23, no. 4, 1987, pages 792-796, XP002070432
- F. WEYGAND, H. DANIEL: "Über die Reaktion von Trimethylammonium-methylid mit Säurechloriden" CHEM. BER., vol. 94, 1961, pages 3147-3150, XP002070433
- CHEMICAL ABSTRACTS, vol. 75, no. 12, 20 September 1971 Columbus, Ohio, US; abstract no. 80214j, J. HALMEKOSKI ET AL.: "Tetraphenylborate derivatives of some adrenergic amines" page 226; XP002070434 & FARM. AIKAK., vol. 80, no. 4-5, 1971, pages 187-196,

## Description

The present invention relates to α- ammonium ketones, iminium ketones or amidinium ketones in the form of their tetraaryl- or triarylalkylborate salts which can be photochemically converted into amines, imines or amidines as well as to a process for their preparation. This invention also relates to base-polymerisable or crosslinkable compositions comprising these α-ammonium ketones, iminium ketones or amidinium ketones in the form of their tetra- or triarylalkylborate salts, to a process for carrying out photochemically induced, base-catalysed reactions as well as to their use as photoinitiators for base-catalysed reactions,

The photolytic cleavage of specific α-amino ketones into radicals and the photopolymerlsation of olefinically unsaturated monomers or oligomers which this initiates have long been known and are described, for example, In EP-A-284 561.
In addition to radically polymerisable oligomers or monomers, base-catalysable systems have been disclosed in particular for photolithographic processes. These systems require a photoinitiator which releases a base on exposure to light. D, R. MacKean et al., Polym. Mater. Sci. Eng. (1992), 66, 237-238*,* for example, report on the photostructuring of polyimide using specific carbamates as photoinitiators.
In J. of Polymer Science: Polym. Chem. Ed., Vol. 12, 2943-2951 (1974), Ko *et al.* report on BF₄⁻ salts containing α-ammonium ketones which on exposure to light decompose into radicals with α- cleavage but which do not form any free amine and which are therefore unsuitable as latent bases.
J. Chem. Soc. (C), 1971, 1863-1869 describes bromine salts of α-ammonium ketones which on exposure to light result i protonated amines and which are therefore also unsuitable as latent bases.
In Chem. Mater. 1996, 8, 1360-1362, Neckers *et al.* recently reported on novel systems for photostructuring based on polymeric ammonium phenylborates containing mobile benzophenone groups at the polymer structure.
In JP 07-070068-A*,* JP 07-070221-A*,* and JP 09-328507-A pyridinum borate salts are disclosed as radical photopolymerization initiators

In EP-A-377 321 photopolymerizable compositions which as one component in a mixture of different photoinitiators comprise an aromatic onium salt are described. As suitable onium salt inter alia tetrahalogenoborates with ammonium and corresponding cations are disclosed. *In* J. Org. Chem. USSR 23(4), (1987), 792-96 the authors give a review of dissociation processes in N-phenylacylimldazolium to be meployed in pharmaceutical applications.
F. Wiegand et al. in Chem. Ber. 94 (1961), 3147-50 disclose the reaction of
trimethylammonium-methylid with acid chlorides resulting in the corresponding ammonium salts.
From *Chemical Abstract 80214j* tetraphenylborate derivatives are known as adrenergic amines.

Surprisingly, it has now been found that certain α- ammonium ketones, iminium ketones or amidinium ketones in the form of their tetraaryl- or triarylalkylborate salts release an amine, imine or amidine group on exposure to visible light or UV light. These groups are sufficiently basic to initiate a large number of base-catalysable reactions, in particular polymerisation reactions. These compounds are of high sensitivity and through the choice of the substitution pattern the absorption spectrum can be varied within a wide range,

These compounds make it possible to prepare so-called one-pot systems with base-catalysable oligomers or monomers having an extremely long storage life. A polymerisation reaction, for example, is initiated only after exposure to light, The systems can be formulated with little or no solvent, since the compounds can be dissolved in the monomers or oligomers without being affected. The active catalyst is formed only after exposure to light. These systems can be employed for numerous purposes, such as for finishes, coatings, moulding compounds or photolithographic reproductions.

This invention provides compounds of formula (I) 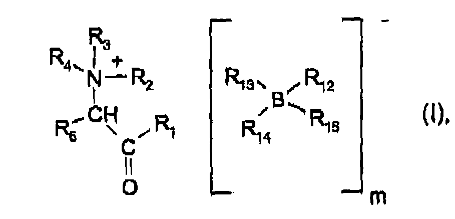 wherein
m is 1 or 2 and corresponds to the number of positive charges of the cation;
**R₁** is phenyl, naphthyl, pyrenyl, thioxanthyl or phenothiazinyl, which radicals are unsubstituted or mono- or polysubstituted by C₁-C₁₈alkyl, C₁-C₁₈haloalkyl, NR₆R₇, CN, NO₂, SR₈ or OR₈;
**R₂, R₃, R₄** are each independently of one another C₁-C₁₈alkyl, or together with the nitrogen atom, are a group of the structural formula (a), (b), (c), (d) or (e) 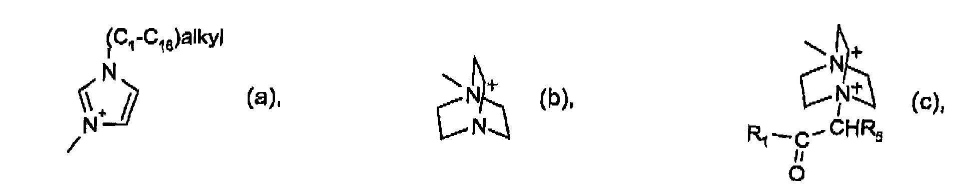 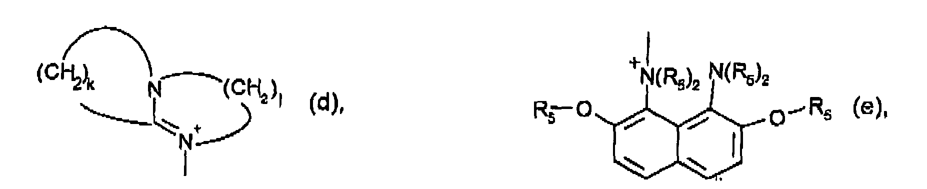 wherein
   **k** and **l** are each independently of the other a number from 2 to 12;
   **R₅**, **R₆**, **R₇** and **R₈** are hydrogen or C₁-C₁₈alkyl;
   **R₁₂**, **R₁₃**, **R₁₄** are phenyl, biphenylyl, naphthyl, anthracyl or phenanthryl, which radicals are unsubstituted or mono- or polysubstituted by C₁-C₁₈alkyl, C₁-C₁₈haloalkyl, NO₂, OH, CN, **OR₆**, or halogen; and
   **R₁₅** is C₁-C₁₈alkyl or phenyl which is unsubstituted or mono- or polysubstituted by C₁-C₁₈alkyl, C₁-C₁₆haloalkyl, NO₂, OH, CN, OR₆ or halogen.
   provided that,
   if R₁₂, R₁₃, R₁₄ and R₁₅ simultaneously are phenyl.
   (a) R₂, R₃ and R₄ are not simultaneously methyl; and
   (b) R₂, R₃ and R₄ together are no

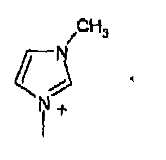

The absorption maximum can be varied within a wide range through the choice of the aromatic or heteroaromatic R₁ and of the respective borate anion, and so the photosensitivity of the compounds can be shifted from the UV into the daylight region.

Alkyl in the various radicals having up to 18 carbon atoms is a branched or unbranched radical such as methyl, ethyl, propyl, isopropyl, n-butyl, sec-butyl, isobutyl, tert-butyl, 2-ethylbutyl, n-pentyl, Isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1, 3-trimethylhexyl, 1,1,3,3-tetramethylpentyl, nonyl, decyl, undecyl, 1-methylundecyl, dodecyl, 1,1,3,3,5,5-hexamethythexyl, tridecyl, tetradecyl, pentadecyl, hexadecyl, heptadecyl, octadecyl, Preference is given to alkyl having 1 to 12, especially 1 to 6, carbon atoms.

Halogen is fluoro, chloro, bromo or iodo,

Typical examples of C₁-C₁₈haloalkyl are fully or partly halogenated C₁-C₁₈alkyl. Illustrative example thereof are the positional isomers of mono- to decafluoropentyl, mono- to octafluorobutyl, mono- to hexafluoropropyl, mono- to tetrafluoroethyl and mono- and difluoromethyl and also the corresponding chloro, bromo and iodo compounds. Preference is given to the perfluorinated alkyl radicals. Examples of these are perfluoropentyl, perfluorobutyl, perfluoropropyl, perfluoroethyl and, in particular, trifluoromethyl.

Examples of the NR₈R₉ amino group are the respective monoalkyl or dialkylamino groups such as methylamino, ethylamino, propylamino, butylamino, pentylamino, hexylamino, octadecylamino, dimethylamino, diethylamino, dipropylamino, diisopropylamino, di-n-butylamino, dl-isobutylamino, dipentylamino, dihaxyiamlno or dioctadecylamino. Further dialkylamino groups are those in which the two radicals independently of one another are branched or unbranched, for example methylethylamino, methyl-n-propylamino, methylisopropylamino, methyl-n-butylamino, methylisobutylamino, ethylisopropylamino, ethyl-n-butylamino, ethylisobutylamino, ethyl-tert-butylamino, isopropyl-n-butylamino or isopropylisobutylamino.

The alkoxy group OR₁₀ having up to 18 carbon atoms is a branched or unbranched radical such as methoxy, ethoxy, propoxy, isopropoxy, n-butoxy, isobutoxy, pentoxy, isopentoxy, hexoxy, heptoxy, octoxy, decyloxy, tetradecyloxy, hexadecyloxy or octadecyloxy. Preference is given to alkoxy having 1 to 12, especially 1 to 8, for example 1 to 6, carbon atoms.

Examples of the thioalkyl group SR₁₀ are thiomethyl, thioethyl, thiopropyl, thiobutyl, thiopentyl, thiohexyl, thioheptyl, thiooctyl or thiooctadecyl, it being possible for the alkyl radicals to be linear or branched.

Suitable borate anions for the nitrogenous base cation in the compounds of formula I are also to be found, inter alia, in US 4772530, GB 2307474, GB 2307473, GB 2307472, EP 775706. Illustrative examples are triphenylbutylborate, triphenylhexylborate, triphenylmethylborate, dimesitylphenylmethylborate or dimesitylphenylbutylborate, di(bromomesityl)phenylmethylborate or di(bromomesityl)phenylbutylborate, tris(3-fluorophenyl)hexylborate, tris(3-fluorophenyl)methylborate or tris(3-fluorophenyl)butylborate, dichloromesitylphenylmethylborate or dichloromesitylphenylbutylborate, tris(dichloromesityl)methylborate, tris(3-chlorophenyl)hexylborate, tris(3-chlorophenyl)methylborate or tris(3-chlorophenyl)butylborate, tris(3-bromophenyl)hexylborate, tris(3-bromphenyl)methylborate or tris(3-bromophenyl)butylborate, tris(3,5-difluorophenyl)hexylborate, dimesitylbiphenylbutylborate, dimesitylnaphthylmethylborate or dimesitylnaphthylbutylborate, di(o-tolyl)-9-anthracylmethylborate or di(o-tolyl)-9-anthracylbutylborate, dimesityl-9-phenanthrylphenylborate or dimesityl-9-phenanthrylphenylbutylborate or

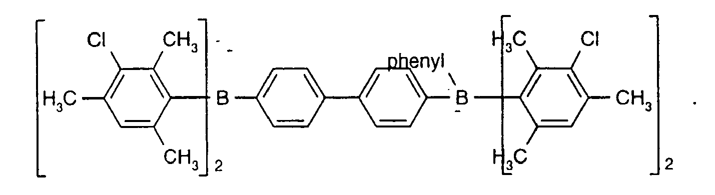

The preparation of these anions is described in the above-mentioned publications.

The preparation of the bromides or iodides of the novel compounds of formula I is carried out, for example, by the methods described by A. Padwa, W. Eisenhardt, R. Gruber and D. Pashayan in J. Am. Chem. Soc., 93, 6998 (1971) or by T. Laird and H. Williams, J. Chem. Soc. (C), 3467 (1971).

The borates are obtained therefrom in analogous manner. The reaction can be carried out in per se known manner. It is useful to also use a solvent or a mixture of solvents, for example hydrocarbons (benzene, toluene, xylene), halogenated hydrocarbons (methylene chloride, chloroform, carbon tetrachloride, chlorobenzene), alkanols (methanol, ethanol, 2-methoxyethanol), and ethers (diethyl ether, dibutyl ether, 1,2-dimethoxyethane), or mixtures thereof.

The reaction is conveniently carried out in the temperature range from -10°C to + 100°C. It is preferably carried out in the range from 10°C to 50°C.

This invention also provides a process for the preparation of the compounds of formula I, which comprises reacting in a first step a nitrogenous base of formula II

NR₂R₃R₄ (II)

with an α- halogen ketone of formula III 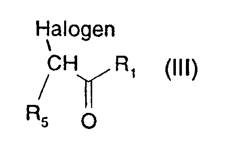 to a compound of formula IV 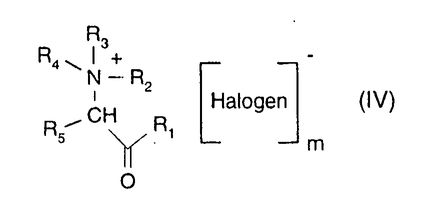 and, in a second step, reacting the compounds of formula IV with a compound of formula V 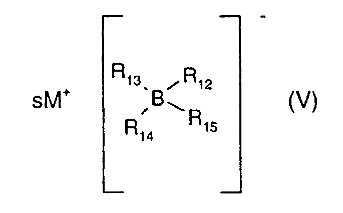 to the compound of formula I, wherein halogen is bromo or iodo, and M is Na, K or ammonium, and R₁, R₂, R₃, R₄, R₅, R₁₂, R₁₃, R₁₄ and R₁₅ have the meanings and preferred meanings stated above.

This invention also relates to a composition, comprising
A) at least one compound of formula (I), and
B) at least one organic compound which is capable of a base-catalysed addition reaction or substitution reaction.

The base-catalysed addition reaction or substitution reaction can be carried out with low molecular compounds (monomers), with oligomers, with polymeric compounds or with a mixture of these compounds. Examples of reactions which can be carried out both with monomers and with oligomers/polymers using the novel photinitiators are the Knoevenagel reaction or the Michael addition reaction.

Particularly important compositions are those, wherein component B) is an anionically polymerisable or crosslinkable organic material.
The organic material can be in the form of mono- or polyfunctional monomers, oligomers or polymers.

Particularly preferred oligomeric/polymeric systems are binders or coating systems as are customary in the coatings industry.

Examples of such base-catalysable binders or coating systems are:
a) acrylate copolymers having alkoxysilane or alkoxysiloxane side groups, for example the polymers described in US-A-4,772,672 or US-A-4,444,974;
b) two-component systems comprising hydroxyl group-containing polyacrylates, polyesters and/or polyethers and aliphatic or aromatic polyisocyanates;
c) two-component systems comprising functional polyacrylates and a polyepoxide, where the polyacrylate contains carboxyl or anhydride groups;
d) two-component systems comprising fluorine-modified or silicone-modified hydroxyl group-containing polyacrylates, polyesters and/or polyethers and aliphatic or aromatic polyisocyanates;
e) two-component systems comprising (poly)ketimines and aliphatic or aromatic polyisocyanates;
f) two-component systems comprising (poly)ketimines and unsaturated acrylate resins or acetoacetate resins or methyl α-acrylamidomethylglycolate;
h) two-component systems comprising (poly)oxazolidines and polyacrylates containing anhydride groups, or unsaturated acrylate resins or polyisocyanates;
i) two-component systems comprising epoxy-containing polyacrylates and carboxyl-group containing polyacrylates;
l) polymers based on allyl glycidyl ether;
m) two-component systems comprising a (poly)alcohol and a (poly)isocyanate;
n) two-component systems comprising an α,β-ethylenically unsaturated carbonyl compound and a polymer which contains activated CH₂ groups, it being possible for the activated CH₂ groups to be present either in the main chain or in the side chain or in both, as is described, for example, in EP-B-0 161 697 for (poly)malonate groups. Other compounds having activated CH₂ groups are (poly)acetoacetates and (poly)cyanoacetates.

Among these base-catalysable binders particular preference is given to the following:
b) two-component systems comprising hydroxyl group-containing polyacrylates, polyesters and/or polyethers and aliphatic or aromatic polyisocyanates;
c) two-component systems comprising functional polyacrylates and a polyepoxide, where the polyacrylate contains carboxyl or anhydride groups;
i) two-component systems comprising epoxy-containing polyacrylates and carboxyl-group containing polyacrylates;
m) two-component systems comprising a (poly)alcohol and a (poly)isocyanate, and
n) two-component systems comprising an α,β-ethylenically unsaturated carbonyl compound and a polymer which contains activated CH₂ groups, it being possible for the activated CH₂ groups to be present either in the main chain or in the side chain or in both, as is described, for example, in EP-B-O 161 697 for (poly)malonate groups. Other compounds having activated CH₂ groups are (poly)acetoacetates and (poly)cyanoacetates.

Two-component systems comprising an α,β-ethylenically unsaturated carbonyl compound and a (poly)malonate, and their preparation, are described in EP-B-O 161 687. The malonate group here can be attached in a polyurethane, polyester, polyacrylate, epoxy resin, polyamide or polyvinyl polymer either in the main chain or in a side chain. The α,β-ethylenically unsaturated carbonyl compound employed can be any double bond activated by a carbonyl group. Examples are esters or amides of acrylic acid or methacrylic acid. In the ester groups it is also possible for additional hydroxyl groups to be present. Diesters and triesters are also possible.
Typical examples are hexanediol diacrylate or trimethylolpropane triacrylate. Instead of the acrylic acid it is also possible to use other acids and their esters or amides, such as crotonic or cinnamic acid.

Under base catalysis, the components of the system react with one another at room temperature to form a crosslinked coating system which is suitable for numerous applications. Owing to its good inherent weathering resistance it is suitable, for example, for exterior applications as well and can, if required, be additionally stabilised by UV absorbers and other light stabilisers.

Other systems suitable as component B) in the novel compositions are epoxy systems. Epoxy resins are suitable for preparing novel, curable mixtures comprising epoxy resins as component B) are those which are customary in epoxy resin technology, examples of such epoxy resins being:
I) Polyglycidyl and poly(β-methylglycidyl) esters, obtainable by reacting a compound having at least two carboxyl groups in the molecule with epichlorohydrin or β-methylepichlorohydrin. The reaction is judiciously carried out in the presence of bases. As the compound having at least two carboxyl groups in the molecule it is possible to use aliphatic polycarboxylic acids. Examples of such polycarboxylic acids are oxalic, succinic, glutaric, adipic, pimelic, suberic, azelaic or dimerised-or trimerised linoleic acid. It is also possible, however, to employ cycloaliphatic polycarboxylic acids, such as tetrahydrophthalic, 4-methyltetrahydrophthalic, hexahydrophthalic or 4-methylhexahydrophthalic acid. Aromatic polycarboxylic acids, furthermore, can be used, such as phthalic, isophthalic or terephthalic acid.
II) Polyglycidyl or poly(β-methylglycidyl) ethers, obtainable by reacting a compound having at least two free alcoholic hydroxyl groups and/or phenolic hydroxyl groups with epichlorohydrin or β-methylepichlorohydrin under alkaline conditions or in the presence of an acidic catalyst with subsequent alkali treatment.
   The glycidyl ethers of this type are derived, for example, from acyclic alcohols, such as ethylene glycol, diethylene glycol and higher poly(oxyethylene) glycols, propane-1,2-diol or poly(oxypropylene) glycols, propane-1,3-diol, butane-1 ,4-diol, poly(oxytetramethylene) glycols, pentane-1,5-diol, hexane-1,6-diol, hexane-2,4,6-triol, glycerol, 1,1,1-trimethylolpropane, pentaerythritol, sorbitol, and from polyepichlorohydrins. They also derive, for example, from cycloaliphatic alcohols, such as 1,4-cyclohexanedimethanol, bis(4-hydroxycyclohexyl)-methane or 2,2-bis(4-hydroxycyclohexyl)propane, or possess aromatic nuclei, such as N,N-bis(2-hydroxyethyl)aniline or p,p'-bis(2-hydroxyethylamino)diphenylmethane. The glycidyl ethers can also be derived from mononuclear phenols, such as resorcinol or hydroquinone, or are based on polynuclear phenols, such as bis(4-hydroxyphenyl)methane, 4,4'-dihydroxybiphenyl, bis(4-hydroxyphenyl) sulfone, 1,1,2,2-tetrakis(4-hydroxyphenyl)ethane, 2,2-bis(4-hydroxyphenyl)propane, 2,2-bis(3,5-dibromo-4-hydroxyphenyl)propane and from novolaks, obtainable by condensing aldehydes, such as formaldehyde, acetaldehyde, chloral or furfuraldehyde, with phenols, such as phenol, or with phenols whose nucleus is substituted by chlorine atoms or C₁-C₉alkyl groups, examples being 4-chlorophenol, 2-methylphenol, or 4-tert-butylphenol, or by condensation with bisphenols, those of the type specified above.
III) Poly(N-glycidyl) compounds, obtainable by dehydrochlorination of the reaction products of epichlorohydrin with amines containing at least two active hydrogen bound to amino nitrogen atoms. These amines are, for example, aniline, n-butylamine, bis(4-aminophenyl)-methane, m-xylylenediamine or bis(4-methylaminophenyl)methane.
   The poly(N-glycidyl) compounds also include triglycidyl isocyanurate, N,N'-diglycidyl derivatives of cycloalkylene ureas, such as ethylene urea or 1,3-propylene urea, and diglycidyl derivatives of hydantoins, such as of 5,5-dimethylhydantoin.
IV) Poly(S-glycidyl) compounds, for example di-S-glycidyl derivatives derived-from dithiols such as ethane-1,2-dithiol or bis(4-mercaptomethylphenyl) ether.
V) Cycloaliphatic epoxy resins, for example bis(2,3-epoxycyclopentyl) ether, 2,3-epoxycyclopentyl glycidyl ether, 1,2-bis(2,3-epoxycyclopentyloxy)ethane or 3,4-epoxycyclohexylmethyl 3',4'-epoxycyclohexanecarboxylate.
   However, it is also possible to use epoxy resins in which the 1,2-epoxide groups are attached to different heteroatoms and/or functional groups; these compounds include, for example, the N,N,O-triglycidyl derivative of 4-aminophenol, the glycidyl ether glycidyl ester of salicylic acid, N-glycidyl-N'-(2-glycidyloxypropyl)-5,5-dimethylhydantoin or 2-glycidyloxy-1,3-bis(5,5-dimethyl-1-glycidylhydantoin-3-yl)propane.

Mixtures of epoxy resins can also be used as component B).
A composition wherein component B) is a epoxy resin or a mixture of different epoxy resins therefore also conforms to this invention.

The compositions comprise the photoinitiator, component A), preferably in an amount of from 0.01 to 10% by weight, based on the component B).

In addition to the photoinitiator, component A), the photopolymerisable mixtures may include different additives. Examples of these are thermal inhibitors which are intended to prevent premature polymerisation, such as hydroquinone, hydroquinone derivatives, p-methoxyphenol, β-naphthol or sterically hindered phenols such as 2,6-di(tert-butyl)-p-cresol, for example. To increase the dark storage stability it is possible, for example, to use copper compounds, such as copper naphthenate, stearate or octoate, phosphorus compounds, such as triphenylphosphine, tributylphosphine, triethyl phosphite, triphenyl phosphite or tribenzyl phosphite, quarternary ammonium compounds, such as tetramethylammonium chloride or trimethylbenzylammonium chloride, or hydroxylamine derivatives, such as N-diethylhydroxylamine. To exclude atmospheric oxygen during polymerisation it is possible to add paraffin or similar waxlike substances which, owing to their lack of solubility in the polymer, migrate to the surface at the beginning of polymerisation where they form a transparent surface layer which prevents the ingress of air. It is likewise possible to apply an oxygen-impermeable layer. Light stabilisers, which can be added in a small amount, are UV absorbers such as those, for example, of the hydroxyphenylbenzotriazole, hydroxyphenylbenzophenone, oxalamide or hydroxyphenyl-s-triazine type. Individual compounds or mixtures of these compounds can be used, with or without the use of sterically hindered amines (HALS).

Illustrative examples of such UV absorbers and light stabilisers are the following:
1.2-(2'-Hdroxyenyl)benzotriazoles, for example 2-(2'-hydroxy-5'-methylphenyl)-1, 2-(3',5'-di-tert-butyl-2'-hydroxyphenyl)benzotriazole, 2-(5'-tert -butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2' -hydroxy-4' -octyloxyphenyl)benzotriazole, 2-(3',5'-di-tert-amyl-2'-hydroxyphenyl)benzotrazole, 2-(3',5'-bis-(α,α-dimethylbenzyl)-2'-hydroxyphenyl)benzotriazole, a mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethyhexyloxy)carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃]₂- where R = 3'-tert-butyl-4'-hydroxy-5'-2H-benzotriazol-2-ylphenyl.
2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
3. Esters of substituted and unsubstituted benzoic acids, as for example 4-tertbutyl-phenyl sallcylate, phenyl sallcylate, octylphenyl sallcylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxy-cinnamate, methyl α-carbomethoxy-p-methoxycinnamate and N-(β-carbomethoxy-β-cyanovinyl)-2-methylindoline.
5. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decan-2,4-dione, bis(1-octyloxy-2,2,6,6-tetramethylpiperidyl)sebacate, bis(1-octyloxy-2,2,6,6-tetramethylpiperidyl)succinate, the condensate of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione.
6. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxaniide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
7. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dinethylphenyl)-1,3,5-triazine.
8. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl)-4,4'-biphenylene diphosphonite, 6-isooctyloxy-2,4,8,10-tetra-tert-butyl-12H-dibenz-[d,g]-1,3,2-dioxaphosphocin, 6-fluoro-2,4,8,10-tetra-tert-butyl-12-methyl-dibenz[d,g]-1,3,2-dioxaphosphocin, bis(2,4-di-tert-butyl-6-methylphenyl) methyl phosphite, bis(2,4-di-tert-butyl-6-methylphenyl) ethyl phosphite.

Illustrative examples of further additves are:
Fillers and reinforcing agents, for example, calcium carbonate, silicates, glass fibres, glass beads, asbestos, talc, kaolin, mica, barium sulfate, metal oxides and hydroxides, carbon black, graphite, wood flour and flours or fibers of other natural products, synthetic fi bres.
Other additives, for example, plasticisers, lubricants, emulsifiers, pigments, rheology additives, catalysts, flow-control agents, optical brighteners, flameproofing agents, antistatic agents and blowing agents.

In addition to the additives indicated above it is also possible for additional coinitiators to be present. In general these are dyes which improve the overall quantum yield by means, for example, of energy transfer or electron transfer. Examples of suitable dyes which can be added as coinitiators are triarylmethanes, for example malachite green, indolines, thiazines, for example methylene blue, xanthones, thioxanthones, oxazines, acridines oder phenazines, for example safranine, and rhodamines of formula 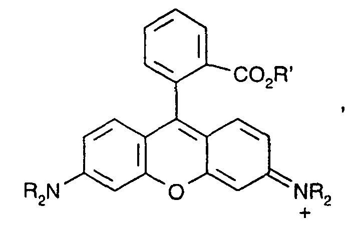 wherein R is alkyl or aryl, and R' is hydrogen, an alkyl or aryl radical, for example Rhodamine B, Rhodamine 6G or Violamine R, and also Sulforhodamine B or Sulforhodamine G.

Preference is given to thioxanthones, oxazine, acridines, phenazines and rhodamines.
Also suitable are in this connection combinations of dyes with borates, as described, inter alia, in US 4772530, GB 2307474, GB 2307473, GB 2307472 and EP 775706.

In addition to the above-described base-catalysable (curable) binders, component B), the composition may also include other binders as well. It is possible to use, for example, further olefinically unsaturated compounds. The unsaturated compounds may include one or more olefinic double bonds. They may be of low molecular mass (monomeric) or higher molecular mass (oligomeric). Examples of monomers having a double bond are alkyl acrylates or hydroxyalkyl acrylates or alkyl methacrylates or hydroxyalkyl methacrylates, such as methyl, ethyl, butyl, 2-ethylhexyl or 2-hydroxyethyl acrylate, isobornyl acrylate, methyl methacrylate or ethyl methacrylate. Silicone acrylates are also of interest. Further examples are acrylonitrile, acrylamide, methacrylamide, N-substituted (meth)acrylamides, vinyl esters such as vinyl acetate, vinyl ethers such as isobutyl vinyl ether, styrene, alkyl- and halostyrenes, N-vinylpyrrolidone, vinyl chloride or vinylidene chloride.

Examples of monomers having several double bonds are the diacrylates of ethylene glycol, propylene glycol, neopentyl glycol, hexamethylene glycol or bisphenol A, 4,4'-bis(2-acryloyloxyethoxy)diphenylpropane, trimethylolpropane triacrylate, pentaerythritol triacrylate or pentaerythritol tetraacrylate, vinyl acrylate, divinyl benzene, divinyl succinate, diallyl phthalate, triallyl phosphate, triallyl isocyanurate or tris(2-acryloylethyl)isocyanurate.

Examples of polyunsaturated compounds of high molecular mass (oligomers) are acrylated epoxy resins, acrylated polyesters or polyesters containing vinyl ether groups or epoxy groups, polyurethanes and polyethers. Further examples of unsaturated oligomers are unsaturated polyester resins which are mostly prepared from maleic acid, phthalic acid and one or more diols and have molecular weights of about 500 to 3000. In addition it is also possible to employ vinyl ether monomers and oligomers, and also maleate-terminated oligomers with polyester, polyurethane, polyether, polyvinyl ether and epoxy main chains. In particular, combinations of vinyl ether-carrying oligomers and polymers as are described in WO 90/01512 are very suitable. Also suitable are copolymers of vinyl ether and maleic acid-functionalised monomers. Unsaturated oligomers of this kind can also be referred to as prepolymers.

Particularly suitable examples are esters of ethylenically unsaturated carboxylic acids and polyols or polyepoxides, and polymers having ethylenically unsaturated groups in the chain or in side groups, such as unsaturated polyesters, polyamides and polyurethanes and copolymers thereof, alkyd resins, polybutadiene and butadiene copolymers, polyisoprene and isoprene copolymers, polymers and copolymers having (meth)acrylic groups in side chains, and mixtures of one or more such polymers.

If, in addition, use is made of such radically curable monomers, oligomers/polymers then it is judicious to add a further photoinitiator which dissociates into radicals. Such photoinitiators are known and are produced industrially. Examples are benzophenone, benzophenone derivatives, acetophenone, acetophenone derivatives, for example α-hydroxycycloalkyl phenyl ketones, dialkoxyacetophenones, α-hydroxy- or α-aminoacetophenones, 4-aroyl-1,3-dioxolanes, benzoin alkyl ethers and benzil ketals, monoacyl phosphine oxides, bisacylphosphine oxides, ferrocenium compounds or titanocenes.
Examples are specified in EP-A-284 561. Polymer systems of this kind, in which curing/ crosslinking takes place by different mechanisms, are also referred to as hybrid systems.

It is also possible to add non-reactive binders to the novel compositions, which is particularly judicious if the photopolymerisable compounds are liquid or viscous substances. The amount of the non-reactive binder can be, for example, 5-95%, preferably 10-90% and, in particular, 40-90% by weight, based on the overall solids content. The choice of non-reactive binder is made in accordance with the field of use and with the properties required for this use, such as the possibility for development in aqueous and organic solvent systems, adhesion to substrates, ana sensitivity to oxygen.

Examples of suitable binders are polymers having a molecular weight of around 5000-2,000,000, preferably 10,000-1,000,000. Examples are: homo- and copolymeric acrylates and methacrylates, for example copolymers of methyl methacrylate/ethyl acrylate/methacrylic acid, poly(alkyl methacrylates), poly(alkyl acrylates); cellulose esters and ethers, such as cellulose acetate, cellulose acetate butyrate, methylcellulose, ethylcellulose; polyvinylbutyral, polyvinylformal, cyclised rubber, polyethers such as polyethylene oxide, polypropylene oxide, polytetrahydrofuran; polystyrene, polycarbonate, polyurethane, chlorinated polyolefins, polyvinyl chloride, copolymers of vinyl chloride/vinylidene chloride, copolymers of vinylidene chloride with acrylonitrile, methyl methacrylate and vinyl acetate, polyvinyl acetate, copoly(ethylene/vinyl acetate), polymers such as polycaprolactam and poly(hexamethylene adipamide) and polyesters such as poly(ethylene glycol terephtalate) and poly(hexamethylene glycol succinate).

The invention additionally provides a method of carrying out base-catalysed reactions which comprises exposing a novel composition as described above to light having a wavelength of 200 nm to 650 nm.

In some cases it may be advantageous to carry out heating during or after exposure to light. In this way it is possible in many cases to accelerate the crosslinking reaction.

The sensitivity of the novel compositions to light generally extends from about 200 nm through the UV region and into the infrared region (about 20,000 nm, in particular 1200 nm) and therefore spans a very broad range. Suitable radiation comprises, for example, sunlight or light from artificial light sources. Therefore, a large number of very different types of light source can be used. Both point sources and flat radiators (lamp carpets) are suitable. Examples are carbon arc lamps, xenon arc lamps, medium-pressure, high-pressure and low-pressure mercury lamps, doped if desired with metal halides (metal halogen lamps), microwave-excited metal vapour lamps, excimer lamps, superactinic fluorescent tubes, fluorescent lamps, incandescent argon lamps, electronic flashlights, photographic flood lamps, electron beams and X-rays, produced by means of synchrotrons or laser plasma. The distance between the lamp and the substrate according to the invention which is to be exposed can vary depending on the application and on the type and/or power of the lamp, for example between 2 cm and 150 cm. Also especially suitable are laser light sources, for example excimer lasers. Lasers in the visible region or in the IR region can also be employed. Very advantageous here is the high sensitivity of the novel materials and the possibility of adapting a dye as coinitiator to the laser line. By this method it is possible to produce printed circuits in the electronics industry, lithographic offset printing plates or relief printing plates, and also photographic image recording materials.

The novel compositions can be employed for various purposes, for example as printing inks, as clearcoats, as white paints, for example for wood or metal, as coating materials, inter alia for paper, wood, metal or plastic, as powder coatings, as daylight-curable coatings for marking buildings and roads, for photographic reproduction processes, for holographic recording materials, for image recording processes or for the production of printing plates which can be developed using organic solvents or aqueous-alkaline media, for the production of masks for screen printing, as dental filling materials, as adhesives, including pressure-sensitive adhesives, as laminating resins, as etch resists or permanent resists and as solder masks for electronic circuits, for the production of three-dimensional articles by mass curing (UV curing in transparent moulds) or by the stereolithography process, as is described, for example, in US Patent No. 4 575 330, for the preparation of composite materials (for example styrenic polyesters, which may contain glass fibres and/or other fibres and other assistants) and other thick-layer compositions, for the coating or encapsulation of electronic components, or as coatings for optical fibres.

In paint systems, it is common to use mixtures of a prepolymer with polyunsaturated monomers which also contain a monounsaturated monomer. The prepolymer here is primarily responsible for the properties of the coating film, and varying it allows the skilled worker to influence the properties of the cured film. The polyunsaturated monomer functions as a crosslinker, which renders the coating film insoluble. The monounsaturated monomer functions as a reactive diluent, by means of which the viscosity is reduced without the need to use a solvent.

Unsaturated polyester resins are mostly used in two-component systems in conjunction with a monounsaturated monomer, preferably styrene. For photoresists, specific one-component systems are frequently employed, for example polymaleinimides, polychalcones or polyimides, as described in DE-A-2 308 830.

The novel photocurable compositions are suitable, for example, as coating materials for substrates of all kinds, examples being wood, textiles, paper, ceramic, glass, plastics such as polyesters, polyethylene terephthalate, polyolefins or cellulose acetate, especially in the form of films, and also metals such as Al, Cu, Ni, Fe, Zn, Mg or Co and GaAs, Si or SiO₂, on which it is the intention to apply a protective coating or, by imagewise exposure, an image.

The substrates can be coated by applying a liquid composition, a solution or suspension to the substrate. The choice of solvent and the concentration depend predominantly on the type of composition and the coating process. The solvent should be inert: in other words, it should not undergo any chemical reaction with the components and should be capable of being removed again after the coating operation, in the drying process. Examples of suitable solvents are ketones, ethers and esters, such as methyl ethyl ketone, isobutyl methyl ketone, cyclopentanone, cyclohexanone, N-methylpyrrolidone, dioxane, tetrahydrofuran, 2-methoxyethanol, 2-ethoxyethanol, 1-methoxy-2-propanol, 1,2-dimethoxyethane, ethyl acetate, n-butyl acetate and ethyl 3-ethoxypropionate.

Using known coating processes, the solution is applied uniformly to a substrate, for example by spin coating, dip coating, knife coating, curtain coating, brushing, spraying, especially by electrostatic spraying and reverse roll coating, and by electrophoretic deposition. It is also possible to apply the photosensitive layer to a temporary, flexible support and then to coat the final substrate, for example a copper-clad circuit board, by means of layer transfer via lamination.

The amount applied (layer thickness) and the nature of the substrate (layer support) are functions of the desired field of application. The range of layer thicknesses generally comprises values from about 0.1 µm to more than 100 µm.

The novel radiation-sensitive compositions can also be subjected to imagewise exposure. In this case they are used as negative resists. They are suitable for electronics (galvanoresists, etch resists and solder resists), for the production of printing plates, such as offset printing plates, flexographic and relief printing plates or screen printing plates, for the production of marking stamps, and can be used for moulded article etching or as micro resists in the production of integrated circuits. There is a correspondingly wide range of variation in the possible layer supports and in the processing conditions of the coated substrates.

The term "imagewise" exposure relates both to exposure through a photomask containing a predetermined pattern, for example a slide, exposure by a laser beam which is moved under computer control, for example, over the surface of the coated substrate and so generates an image, and irradiation with computer-controlled electron beams.

Following the imagewise exposure of the material and prior to developing, it may be advantageous to carry out a brief thermal treatment, in which only the exposed parts are thermally cured. The temperatures employed are generally 50-150°C and preferably 80-130°C; the duration of the thermal treatment is generally between 0.25 and 10 minutes.

A further field of use for photocuring is that of metal coating, for example the surface-coating of metal panels and tubes, cans or bottle tops, and photocuring on polymer coatings, for example of floor or wall coverings based on PVC.
Examples of the photocuring of paper coatings are the colourless varnishing of labels, record sleeves or book covers.

This invention also relates to the use of a compound of formula I 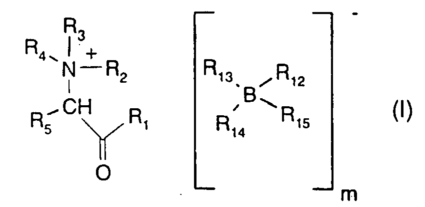 as photoinitiator for photochemically induced base-catalysed addition reactions or substitution reactions, in particular for curing moulded articles made from composite compositions, wherein R₁, R₂, R₃, R₄, R₅, R₁₂, R₁₃, R₁₄, R₁₅ and m have the meanings and preferred meanigs stated above.

Another subject of this invention is the above-mentioned use for the preparation of coatings, moulded articles or photostructured layers.

The composite usually consists of a self-supporting matrix material, for example a glass fibre fabric, or also e.g. vegetable fibres [cf K.-P. Mieck, T. Reussmann in Kunststoffe 85 (1995), 366-370], which is impregnated with the photocuring formulation. Moulded articles made from composites produced with the novel compounds attain a high level of mechanical stability and resistance. The novel compounds can also be used as photocuring agents in moulding, impregnating and coating compositions, such as are described in EP-A-7086. Such compositions are, for example, gel coat resins, which are subject to stringent requirements regarding their curing activity and yellowing resistance, and fibre-reinforced moulded articles, such as light-diffusing panels which are planar or which have lengthwise or crosswise corrugation.

Examples and preferences of base-catalysed addition reactions or substitution reactions are stated above.
In another of its aspects, this invention relates to a coated substrate which has been coated on at least one surface with a composition as described above, and to a process for the photographic production of relief images, in which a coated substrate is subjected to imagewise exposure and then the unexposed areas are removed with a solvent. Of particular interest in this context is the above-mentioned exposure by means of a laser beam.

This invention also relates to the use of the novel compounds for the preparation of coatings, moulding compositions or photostructured layers.
In another of its aspects, this invention relates to polymerised or crosslinked novel compositions.

The following Examples illustrate the invention in more detail. As in the remainder of the description and in the claims, parts and percentages are by weight unless stated otherwise. If alkyl or alkoxy radicals having more than three carbon atoms are indicated without reference to their isomeric form, then the respective n-isomers are meant.
The following abbreviations are used in the Examples:
"Ph" for phenyl, "Me" for methyl, "Et' for ethyl, "Hex" for hexyl, "Ar" for aryl, "DMSO" for dimethylsulfoxide, "U.V." for ultraviolet spectra, "I.R." for infrared spectra, "¹H NMR" for hydrogen nuclear magnetic resonance spectra (indication of the shift values in ppm), "¹³C NMR" for carbon nuclear magnetic resonance spectra (indication of the shift values in ppm)

### Examples A: Preparation of the bromides and iodides

### General procedure

One equivalent of nitrogenous base is stirred into diethyl ether at room temperature. One equivalent of a solution of the corresponding α-bromoketone in toluene is added and the reaction mixture is stirred for one hour. The precipitated bromide is filtered, washed with diethyl ether and the solvent is removed under vacuum, giving the product in 80 to 90 % yields.

In the Examples, the extinction coefficients ε denotes the molar extinction coefficients in the unit l/mol cm.

### Example A1

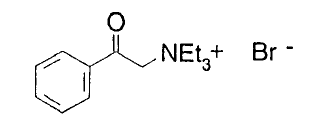

Analysis for C₁₄H₂₂NOBr: calculated: C 56.01; H 7.39; N 4.67; Br 26.61. found: C 56.02; H 7.34; N 4.45; Br 26.82.
U.V. (CHCl₃) max. at 255 nm (ε 13300).
¹H NMR (CDCl₃): 8.03 (2H, d, ArH), 7.38 (1H, t, ArH), 7.23 (2H, m, ArH), 5.20 (2H, s, CH₂), 3.69 (6H, q, CH₂CH₃) and 1.16 (9H, t, CH₂CH₃).

### Example A2

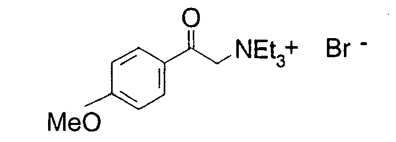

U.V. (CHCl₃) max. at 294 nm (ε 16800).
¹H NMR (CDCl₃): 8.37 (2H, d, ArH), 7.00 (2H, d, ArH), 5.44 (2H, s, CH₂), 3.88 (9H, q and s, CH₂CH₃ and OCH₃) and 1.41 (9H, t, CH₂CH₃).

### Example A3

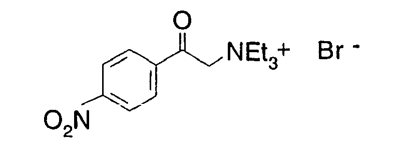

U.V. (MeOH) max. at 261 nm (ε 12800).
¹H NMR (CDCl₃): 8.63 (2H, d, ArH), 8.30 (2H, d, ArH), 5.84 (2H, s, CH₂), 3.86 (6H, q, CH₂CH₃) and 1.41 (9H, t, CH₂CH₃).

### Example A4

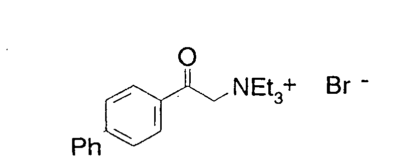

U.V. (CHCl₃) max. at 243 nm (ε 3000) and 305 nm (ε 24000).
¹H NMR (CDCl₃): 8.41 (2H, d, ArH), 7.74 (2H, d, ArH), 7.58 (2H, d, ArH), 7.44 (3H, m, ArH), 5.57 (2H, s, CH₂), 3.87 (6H, q, CH₂CH₃) and 1.42 (9H, t, CH₂CH₃).

### Example A5

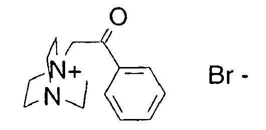

U.V. (H₂O) max. at 252 nm (ε 14100).
¹H NMR (D₂O): 8.01 (2H, d, ArH), 7.79 (1 H, t, ArH), 7.66 (2H, t, ArH), 3.81 (6H, t, NCH₂) and 3.31 (6H, t, NCH₂).

### Example A6

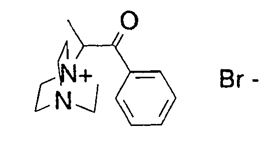

Analysis for C₁₅H₂₁N₂OBr: calculated C 55.39; H 6.51; N 8.61; Br 24.57; found: C 55.11; H 6.59; N 8.70; Br 24.65.
U.V. (CHCl₃) max. at 259 nm (e 14000).
¹H NMR (CDCl₃): 8.15 (2H, d, ArH), 7.50 (1H, t, ArH), 7.37 (2H, t, ArH), 6.03 (1H, q, CH), 3.99 (3H, t, NCH₂), 3.85 (3H, t, NCH₂), 3.14 (6H, m, NCH₂) and 1.59 (3H, d, CH₃).

### Example A7

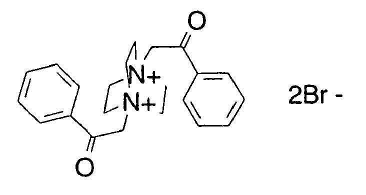

U.V. (H₂O) max. at 254 nm (ε 28200).
¹H NMR (D₂O): 8.01 (4H, d, ArH), 7.80 (2H, t, ArH), 7.62 (4H, t, ArH) and 4.50 (12H, s, NCH₂).

### Example A8

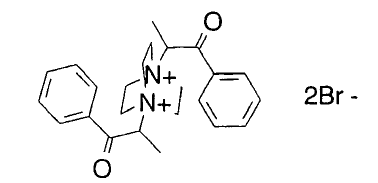

U.V. (MeOH) max. at 256 nm (ε 23500).
¹H NMR (D₂O): 8.07 (4H, d, ArH), 7.82 (2H, t, ArH), 7.66 (4H, t, ArH), 5.74 (2H, q, CH), 4.53 (6H, m, NCH₂), 4.30 (6H, m, NCH₂) and 1.85 (6H, d, CH₃).

### Example A9

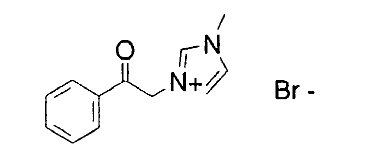

U.V. (CD₃CN) max. at 245 (ε 14600) and 281 (ε 1500).
¹H NMR (DMSO): 9.06 (1H, s, ArH), 8.05 (2H, d, ArH), 7.80-7.60 (5H, m, ArH), 6.06 (2H, s, CH₂) and 3.95 (3H, s, NCH₃).

### Example A10

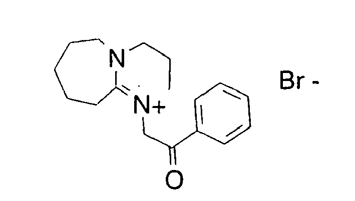

¹H NMR (CDCl₃): 8.07 (2H, d, ArH), 7.63 (1H, t, ArH), 7.50 (2H, t, ArH), 5.57 (2H, s, CH₂), 3.67 (4H, m, NCH₂) and 3.5-1.3 (12H, m, CH₂).

### Example A11

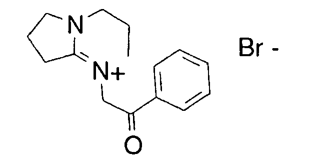

¹H NMR (CDCl₃): 8.02 (2H, d, ArH), 7.61 (1H, t, ArH), 7.48 (2H, t, ArH), 5.33 (2H, s, CH₂), 3.84 (2H, t, NCH₂), 3.67 (4H, m, NCH₂), 3.14 (2H, m, CH₂) and 2.3-2.1 (4H, m, CH₂).

### Example A12

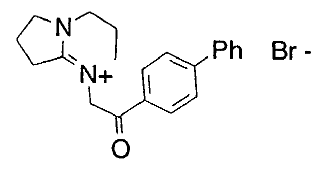

U.V. (CHCl₃) max. at 297 nm (ε 22000).
¹H NMR (CDCl₃): 8.08 (2H, d, ArH), 7.67 (2H, d, ArH), 7.54 (2H, d, ArH), 7.37 (3H, m, ArH), 5.37 (2H, s, CH₂), 3,84 (2H, t, NCH₂), 3.54 (4H, m, NCH₂), 3.11 (2H, m, CH₂) and 2.3-2.1 (4H, m, CH₂).

### Example A13

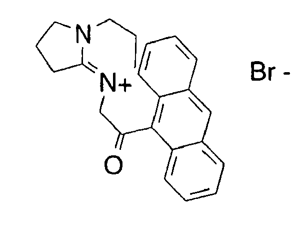

¹ H NMR (CDCl₃): 8.57 (1H, s, ArH), 8.07 (2H, d, ArH), 7.64-7.50 (6H, m, ArH), 4.96 (2H, s, CH₂), 3.94 (2H, t, NCH₂), 3.82 (2H, t, NCH₂), 3.65 (4H, t, CH₂), 3.45-3.30 (6H, m, CH₂) and 2.4-2.1 (6H, m, CH₂).

### Example A14

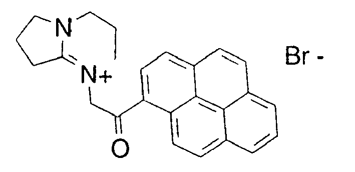

U.V. (CHCl₃) max. at 245 nm (ε 30500), 291 nm (ε 22300), 371 nm (ε 17500) and 403 nm (ε 14900).
¹H NMR (CDCl₃): 9.10 (1H, d, ArH), 8.66 (1H, d, ArH), 8.3-7.8 (7H, m, ArH), 5.56 (2H, s, CH₂), 3.85 (2H, t, NCH₂), 3.57 (2H, t, NCH₂), 3.23 (2H, t, CH₂) and 2.4-2.1 (6H, m, CH₂).

The α-iodoketones are prepared from commercially available α-bromoketones via a Finkelstein reaction. The iodides are the prepared in analogy to the bromides described above.

### Example A15

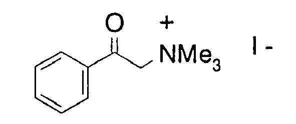

Analysis for C₁₁H₁₆NOl: calculated C 43.30; H 5.29; N 4.59; I 41.59. found: C 43.32; H 5.22; N 4.59; I 41.82.
U.V. (CHCl₃) max. at 246 nm (ε 25800).
¹H NMR (CD₃CN): 8.00 (2H, d, ArH), 7.70 (1H, t, ArH), 7.57 (2H, t, ArH), 5.18 (2H, s, CH₂) and 3.37 (9H, s, CH₃).

### Example A16

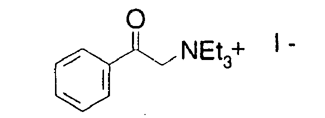

U.V. (CHCl₃) max. at 249 nm (ε 18900).
¹H NMR (CDCl₃): 8.19 (2H, d, ArH), 7.58 (1 H, t, ArH), 7.43 (2H, t, ArH), 5.25 (2H, s, CH₂), 3.82 (6H, q, CH₂CH₃) and 1.34 (9H, t, CH₂CH₃).

### Example A17

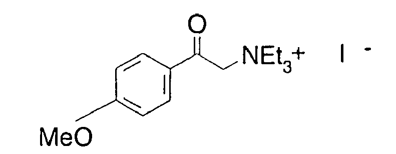

U.V. (CHCl₃) max. at 245 nm (ε 10300) and 295 nm (ε 18100).
¹H NMR (CDCl₃): 8.25 (2H, d, ArH), 6.93 (2H, d, ArH), 5.20 (2H, s, CH₂), 3.82 (9H, q and s, CH₂CH₃ and OCH₃) and 1.37 (9H, t, CH₂CH₃).

### Example A18

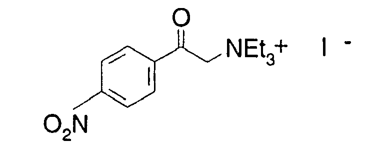

¹H NMR (CDCl₃): 8.59 (2H, d, ArH), 8.32 (2H, d, ArH), 5.68 (2H, s, CH₂), 3.86 (6H, q, CH₂CH₃) and 1.44 (9H, t, CH₂CH₃).

### Example A19

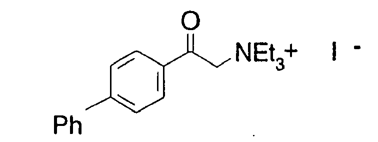

U.V. (CHCl₃) max. at 244 nm (ε 11100) and 305 nm (ε 23400).
¹H NMR (CDCl₃): 8.38 (2H, d, ArH), 7.72 (2H, d, ArH), 7.57 (2H, d, ArH), 7.42 (3H, m, ArH), 5.40 (2H, s, CH₂), 3.88 (6H, q, CH₂CH₃) and 1.42 (9H, t, CH₂CH₃).

### Example A20

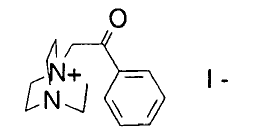

U.V. (MeOH) max. at 249 nm (ε 14900).
¹H NMR (D₂O): 8.00 (2H, d, ArH), 7.78 (1 H, t, ArH), 7.64 (2H, t, ArH), 3.81 (6H, t, NCH₂) and 3.31 (6H, t, NCH₂).

### Example A21

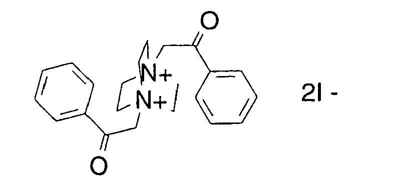

Analysis for C₂₂H₂₆N₂O₂I₂: calculated C 43.73; H 4.34; N 4.64; 142.00. found: C 43.29; H 4.24; N 4.29; 141.82.
U.V. (MeOH) max. at 252 nm (ε 28400).
¹H NMR (DMSO): 8.04 (4H, d, ArH), 7.79 (2H, t, ArH), 7.64 (4H, t, ArH), 5.55 (4H, s, CH₂) and 4.31 (12H, s, NCH₂).

### Example A22

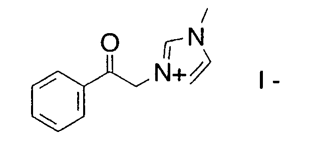

U.V. (CH₃CN) max. at 246 (ε 27400).
¹H NMR (DMSO): 9.03 (1 H, s, ArH), 8.05 (2H, d, ArH), 7.80-7.60 (5H, m, ArH), 6.04 (2H, s, CH₂) and 3.95 (3H, s, NCH₃).

### Example A23

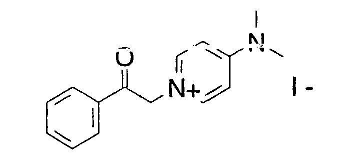

Analysis for C₁₅H₁₇N₂Ol: calculated C 48.93; H 4.65; N 7.61; I 34.46. found: C 48.89; H 4.60; N 7.34; I 34.48.
U.V. (CH₃CN) max. at 257 (ε 20500), 289 nm (ε 26200) and 364 (ε 7000).
¹H NMR (DMSO): 8.18 (2H, d, ArH), 8.03 (2H, d, ArH), 7.76 (1H, t, ArH), 7.64 (2H, d, ArH), 7.12 (2H, d, ArH), 5.96 (2H, s, CH₂) and 3.23 (6H, s, NCH₃).

### Example A24

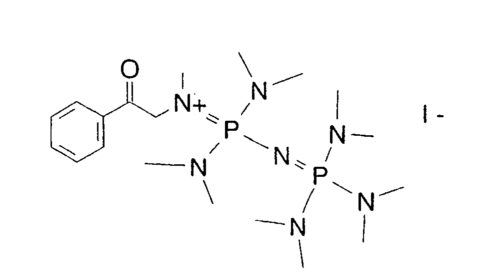

Analysis for C₂₀H₄₂N₇OP₂I: calculated C 41.03; H 7.23; N 16.75; 121.68. found: C 40.62; H 7.49; N 17.10; I 21.56.

### Example A25

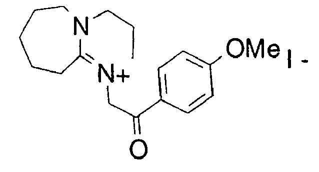

U.V. (CHCl₃) max. at 245 nm (ε 9500), 288 nm (ε 23500) and 366 nm (ε 4100). ¹H NMR (CDCl₃): 7.98 (2H, d, ArH), 6.92 (2H, d, ArH), 5.35 (2H, s, CH₂), 3.81 (3H, s, OCH₃), 3.65 (4H, m, NCH₂) and 3.5-1.3 (12H, m, CH₂).

### Example A26

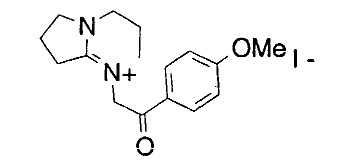

U.V. (CHCl₃) max. at 247 nm (ε 9800) and 287 nm (ε 19500).
¹H NMR (CDCl₃): 7.97 (2H, d, ArH), 6.95 (2H, d, ArH), 5.14 (2H, s, CH₂), 3.85 (5H, m, NCH₂ and OCH₃), 3.55 (4H, m, NCH₂), 3.10 (2H, m, NCH₂) and 2.4-2.2 (4H, m, CH₂).

### Example A27:

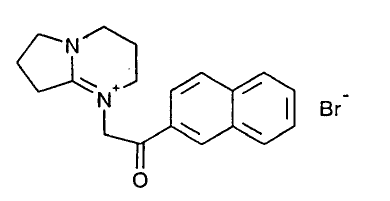

I.R. (KBr): 1690 cm⁻¹, 1665 cm⁻¹ (C=O).
¹H NMR (CDCl₃): 8.72 (1 H, s, ArH), 8.02 (2H, m, ArH), 7.85(2H, m, ArH), 7.56 (2H, m, ArH), 5.45 (2H, s, CH₂), 3.84 (2H, t, NCH₂), 3.58 (4H, m, NCH₂), 3.17 (2H, m, CH₂) and 2.3-2.1 (4H, m, CH₂).

### Example A28:

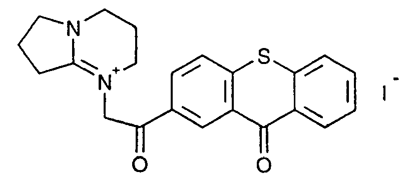

I.R. (KBr): 1695 cm⁻¹, 1665 cm⁻¹ (C=O), 1640 cm⁻¹.
¹H NMR (CDCl₃): 8.95 (1 H, d, ArH), 8.43 (1 H, d, ArH), 8.14 (1H, dd, ArH), 7.54 (4H, m, ArH), 5.42 (2H, s, CH₂), 3.91 (2H, t, NCH₂), 3.71 (2H, t, NCH₂), 3.62 (2H, t, NCH₂), 3.25 (2H, t, NCH₂) and 2.4-2.2 (4H, m, CH₂).

### Examples B: Preparation of the borate salts

### General procedure for the preparation of the tetraphenylborates

One equivalent of the bromides is stirred into water at room temperature and one equivalent of an aqueous solution of sodium tetraphenylborate is added. The precipitated tetraphenylborate salt is isolated by filtration, washed with water and dried under vacuum, giving the product in a 95% yield.

### Example B1

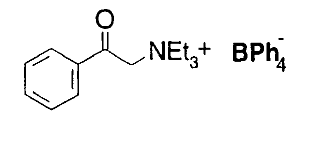

Analysis for C₃₈H₄₂NOB: calculated: C 84.59; H 7.85; N 2.60; found: C 84.31; H 8.18; N 2.16.
U.V. (CHCl₃) max. at 251 nm (ε 18900).
¹H NMR (CDCl₃): 7.63 (3H, m, ArH), 7.28 (10H, m, ArH), 6.94 (8H, t, ArH), 6.80 (4H, t, ArH), 3.78 (2H, s, CH₂), 2.81 (6H, q, CH₂CH₃) and 0.75 (9H, t, CH₂CH₃).
¹³C NMR (CDCl₃): 189.93, 165.96, 165.17, 164.39, 163.61, 136.72, 135.49, 133.99, 129.44, 128.43, 128.37, 128.24, 128.04, 127.87, 127.81, 127.66, 127.48, 127.40, 127.37, 126.24, 126.20, 126.16, 126.12, 122.27, 116.68, 58.60, 54.50 and 7.41.

### Example B2

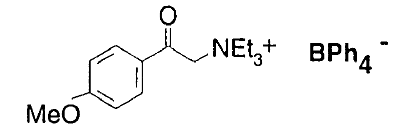

Analysis for C₃₉H₄₄NO₂B: calculated: C 82.24; H 7.79; N 2.46; found: C 82.05; H 8.21; N 2.24.
¹H NMR (DMSO): 8.04 (2H, d, ArH), 7.16 (10H, m, ArH), 6.93 (8H, t, ArH), 6.80 (4H, t, ArH), 5.09 (2H, s, CH₂), 3.89 (3H, s, OCH₃), 3.59 (6H, q, CH₂CH₃) and 1.20 (9H, t, CH₂CH₃).

### Example B3

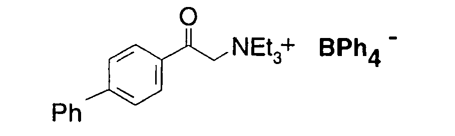

Analysis for C₄₄H₄₆NOB: calculated: C 85.84; H 7.53; N 2.28; found: C 85.86; H 7.55; N 2.04.
¹ H NMR (DMSO): 8.15 (2H, d, ArH), 7.95 (2H, d, ArH), 7.81 (2H, d, ArH), 7.50 (3H, m, ArH), 7.17 (8H, m, ArH), 6.93 (8H, t. ArH), 6.80 (4H, t, ArH), 5.21 (2H, s, CH₂), 3.62 (6H, q, CH₂CH₃) and 1.25 (9H, t, CH₂CH₃).

### Example B4

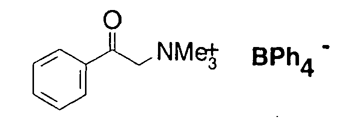

Analysis for C₃₅H₃₆NOB: calculated: C 84.50; H 7.29; N 2.82; found: C 84.52; H 7.29; N 2.64.
¹H NMR (DMSO): 7.99 (2H, d, ArH), 7.77 (1H, t, ArH), 7.63 (2H, t, ArH), 7.18 (8H, m, ArH), 6.93 (8H, t, ArH), 6.79 (4H, t, ArH), 5.27 (2H, s, CH₂) and 3.31 (9H, s, CH₃).

### Example B5

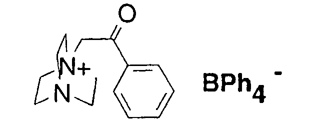

Analysis for C₃₈H₃₉N₂OB: calculated: C 82.90; H 7.14; N 5.09; found: C 82.78; H 7.12; N 4.79.
¹H NMR (CD₃COCD₃): 8.02 (2H, d, ArH), 7.71 (1 H, t, ArH), 7.58 (2H, t, ArH), 7.35 (8H, m, ArH), 6.92 (8H, m, ArH), 6.77 (4H, m, ArH), 3.87 (6H, m, NCH₂) and 3.33 (6H, m, NCH₂).

### Example B6

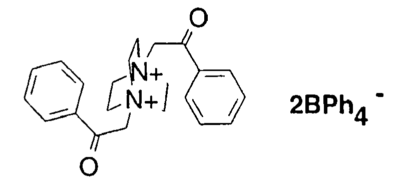

Analysis for C₇₀H₆₆N₂O₂B₂: calculated: C 85.02; H 6.73; N 2.83; found: C 84.97; H 6.60; N 2.87.
¹H NMR (CD₃COCD₃): 8.00 (4H, d, ArH), 7.77 (2H, t, ArH), 7.60 (4H, t, ArH), 7.34 (16H, m, ArH), 6.93 (16H, m, ArH), 6.78 (8H, m, ArH), 5.63 (2H, s, CH₂) and 4.69 (12H, m, NCH₂).

### Example B7

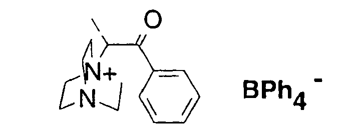

Analysis for C₃₉H₄₁N₂OB: calculated: C 82.97; H 7.32; N 4.96; found: C 82.67; H 7.11; N 4.92.
¹H NMR (CD₃COCD₃): 8.00 (2H, d, ArH), 7.67 (1H, t, ArH), 7.50 (2H, t, ArH), 7.22 (8H, m, ArH), 6.79 (8H, m, ArH), 6.64 (4H, m, ArH), 5.45 (1H, q, CH), 3.83 (3H, m, NCH₂), 3.57 (3H, m, NCH₂), 3.16 (6H, m, NCH₂) and 1.65 (3H, d, CH₃).

### Example B8

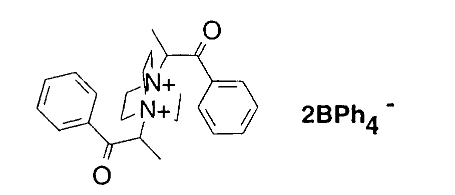

¹H NMR (CD₃COCD₃): 7.97 (4H, d, ArH), 7.66 (2H, t, ArH), 7.51 (4H, t, ArH), 7.22 (16H, m, ArH), 6.79 (16H, m, ArH), 6.65 (8H, m, ArH), 5.88 (2H, m, CH), 4.57 (6H, m, NCH₂), 4.35 (6H, m, NCH₂) and 1.78 (6H, m, CH₃).

### Example B9

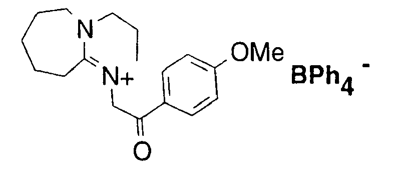

¹H NMR (CDCl₃): 7.57 (2H, d, ArH), 7.5-6.8 (22H, m, ArH), 3.88 (3H, s, OCH₃), 3.85 (2H, s, CH₂), 3.23 (2H, m, CH₂), 3.06 (3H, m, CH₂), 2.87 (1 H, m, CH₂), 2.53 (2H, t, CH₂), 1.87 (2H, m, CH₂) and 1.7-1.3 (6H, m, CH₂).

### Example B10

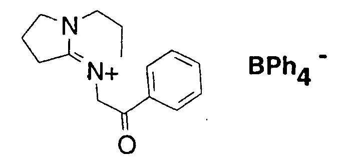

Analysis for C₃₉H₃₉N₂OB: calculated: C 83.27; H 6.99; N 4.98; found: C 82.90; H 7.20; N 4.97.
¹H NMR (C₆D₆): 7.78 (3H, m, ArH), 7.61 (5H, m, ArH), 7.15 (14H, m, ArH), 6.77 (3H, m, ArH), 3.35 (2H, s, CH₂), 2.22 (2H, q, CH₂), 1.8-1.0 (12H, m, CH₂) and 0.23 (9H, t, CH₃).

### Example B11

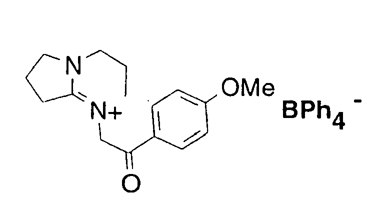

Analysis for C₄₀H₄₃N₂O₂B: calculated: C 80.80; H 7.29; N, 4.71; found: C 81.01; H 7.29; N 4.62.
U.V. (CH₃CN) max. at 275 nm (ε 20100).
¹H NMR (CDCl₃): 7.62 (2H, d, ArH), 7.5-6.8 (22H, m, ArH), 3.90 (3H, s, OCH₃), 3.79 (2H, s, CH₂), 3.51 (2H, t, CH₂), 3.17 (2H, t, CH₂), 2.79 (2H, t, CH₂), 2.53 (2H, t, CH₂) and 1.86 (6H, m, CH₂).

### Example B12

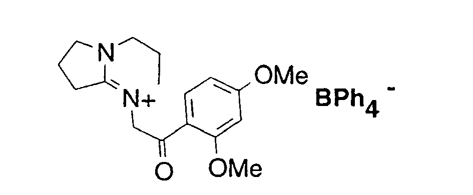

U.V. (CHCl₃) max. at 243 nm (ε 11800), 274 nm (ε 14900) and 312 nm (ε 9400).
¹H NMR (CDCl₃): 7.88 (1H, d, ArH), 7.45 (8H, m, ArH), 6.94 (8H, t, ArH), 6.57 (1 H, dd, ArH), 6.41 (1 H, d, ArH), 4.07 (2H, s, CH₂), 3.86 (3H, s, OCH₃), 3.61 (3H, s, OCH₃), 3.00 (2H, t, CH₂), 2.65 (2H, t, CH₂), 2.56 (2H, t, CH₂), 1.53 (2H, t, CH₂) and 1.30 (6H, m, CH₂).

### Example B13

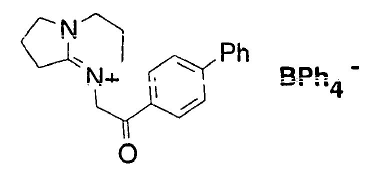

Analysis for C₄₅H₄₃N₂OB: calculated: C 84.63; H 6.79; N 4.39; found: C 84.50; H 6.84; N 4.35.
¹H NMR (CDCl₃): 7.7-6.7 (29H, m, ArH), 3.71 (2H, s, CH₂), 3.08 (2H, t, NCH₂), 2.72 (2H, t, NCH₂), 2.53 (2H, t, CH₂) and 1.7-1.4 (6H, m, CH₂).

### Example B14

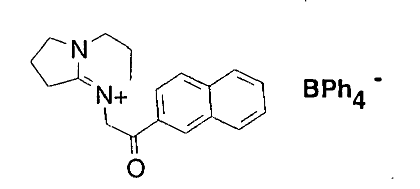

Analysis for C₄₃H₄₁ N₂OB: calculated: C 84.31; H 6.75; N 4.57; found: C 84.20; H 6.82; N 4.50.
U.V. (CH₃CN) max. at 250 nm (ε 63000) and 284 nm (ε 10100).
¹H NMR (CD₃CN): 8.58 (1 H, s, ArH), 8.00 (4H, m, ArH), 7.68 (2H, m, ArH), 7.27 (8H, m, ArH), 6.98 (8H, m, ArH), 6.83 (4H, t, ArH), 5.04 (2H, s, CH₂), 3.71 (2H, t, NCH₂), 3.40 (4H, m, NCH₂), 2.77 (2H, t, CH₂) and 2.1-1.8 (6H, m, CH₂).

### Example B15

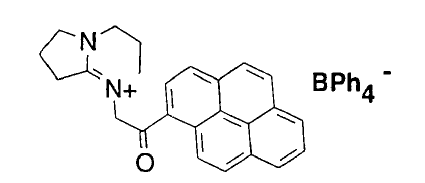

U.V. (CHCl₃) max. at 246 nm (ε 40700), 292 nm (ε 21100), 374 nm (ε 16600) and 406 nm (ε 15600).

### Example B16

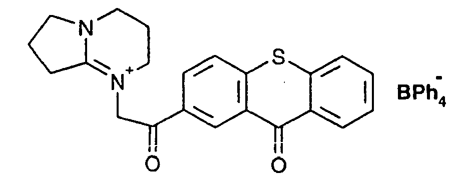

I.R. (KBr): 1695 cm⁻¹, 1680 cm⁻¹ (C=O), 1665 cm⁻¹, 1640 cm⁻¹.
¹H NMR (CD₃COCD₃): 9.01 (1 H, d, ArH), 8.54 (1 H, d, ArH), 8.16 (1H, dd, ArH), 7.86 (1 H, d, ArH), 7.78 (2H, dd, ArH), 7.64 (1H, m, ArH), 7.35 (8H, m, ArH), 6.79 (4H, t, ArH), 5.18 (2H, s, CH₂), 3.70 (2H, t, NCH₂), 3.58 (2H, t, NCH₂), 3.40 (2H, dd, NCH₂) and 2.7-2.1 (6H, m, CH₂).

### Preparation of the tetra(4-fluorophenyl)borate salts

One equivalent of the bromides is stirred into water at room temperature and one equivalent of an aqueous solution of sodium tetra(4-fluorophenyl)borate dihydrate is added. The precipitated tetra(4-fluorophenyl)borate salt is isolated by filtration, washed with water and dried under vacuum, giving the product in quantitative yield.

### Example B17

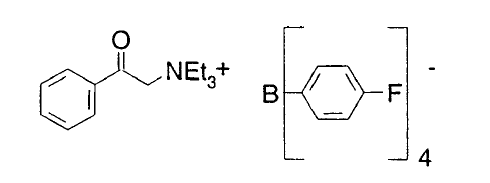

U.V. (CHCl₃) max. at 255 nm (ε 16100).
¹H NMR (CDCl₃): 7.81 (2H, d, ArH), 7.63 (1H, t, ArH), 7.45 (2H, t, ArH), 7.16 (8H, m, ArH), 6.67 (8H, m, ArH), 4.36 (2H, s, CH₂), 3.32 (6H, q, CH₂CH₃) and 1.08 (9H, t, CH₂CH₃)- ¹³C
NMR (C₆D₆): 162.34, 159.20, 137.61, 135.69, 129.57, 128.52, 128.20, 127.88, 116.92, 54.67 and 7.44.

### Example B18

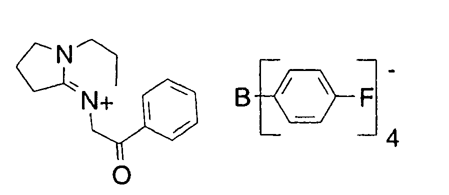

Analysis for C₃₉H₃₅N₂OBF₄: calculated: C 73.82; H 5.56; N 4.41; found: C 73.62; H 5.55; N 4.63.
U.V. (CHCl₃) max. at 246 nm (ε 20700).
¹H NMR (C₆D₆): 7.74 (2H, d, ArH), 7.61 (8H, m, ArH), 7.34-7.15 (3H, m, ArH), 6.91 (8H, m, ArH), 4.09 (2H, s, CH₂), 2.22 (2H, q, CH₂), 1.8-1.0 (12H, m, CH₂) and 0.23 (9H, t, CH₃). ¹³C NMR (CDCl₃): 197.79, 167.20, 163.43, 141.89, 139.85, 134.37, 133.53, 117.48,
117.43, 117.19, 117.15, 64.01, 59.94, 51.83, 47.73, 35.70, 24.15 and 23.16.

### Preparation of tetra(2,3,4,5,6-pentafluorophenyl)borate salt

One equivalent of the bromides is stirred into water at room temperature and one equivalent of a methanolic/aqueous solution (3/1) of tetraethyl ammonium-tetra(2,3,4,5,6-pentafluorophenyl)borate is added. The precipitated tetra(2,3,4,5,6-pentafluorophenyl)borate is isolated by filtration, washed with water and dried under vacuum, giving the product in a 75% yield.

### Example B19

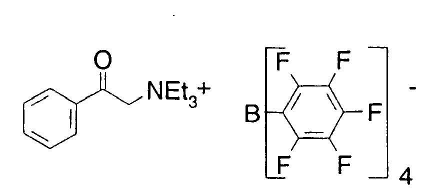

U.V. (CHCl₃) max. at 256 nm (ε 12800).
¹H NMR (CDCl₃): 7.85 (2H, d, ArH), 7.63 (1H, t, ArH), 7.44 (2H, t, ArH), 4.60 (2H, s, CH₂), 3.52 (6H, q, CH₂CH₃) and 1.17 (9H, t, CH₂CH₃).

### Preparation of tri(3-fluorophenyl)hexylborate salt

One equivalent of the bromides is stirred into water at room temperature and one equivalent of a methanolic solution of tetramethyl ammonium-tri(3-fluorophenyl)hexylborate is added. The precipitated tri(3-fluorophenyl)hexylborate salt is isolated by filtration, washed with water and dried under vacuum, giving the product in a 75% yield.

### Example B20

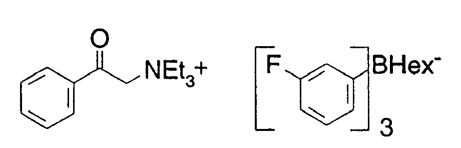

U.V. (CHCl₃) max. at 252 nm (ε 17600).
¹H NMR (CDCl₃): 7.68 (3H, m, ArH), 7.49 (2H, t, ArH), 7.22 (3H, d, ArH), 6.99 (6H, m, ArH), 6.53 (3H, m, ArH), 3.78 (2H, s, CH₂), 2.99 (6H, q, CH₂CH₃) and 1.4-0.7 (22H, m. CH₂ and CH₃).

### Example B21:

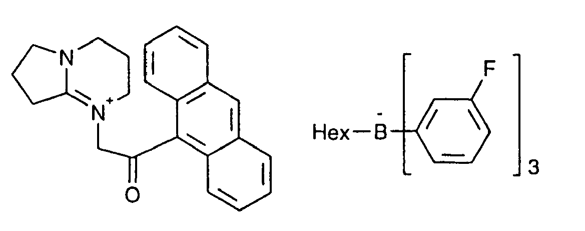

U.V. (CHCl₃) max. Bei 257 nm (ε 89900), 369 nm (ε 6300) and 388 nm (ε 5800).
¹H NMR (CDCl₃): 8.62 (1H, s, ArH), 8.11 (2H, m, ArH), 7.62-7.45 (6H, m, ArH), 7.08 (3H, m, ArH), 6.87 (6H, m, ArH), 6.41 (3H, m, ArH), 4.24 (2H, s, CH₂), 3.44 (2H, t, NCH₂), 3.15 (2H, t, NCH₂), 3.04 (2H, t, NCH₂), 2.51 (2H, t, CH₂), 2.01-1.7 (4H, m, CH₂) and 1.3-0.7 (13H, m, CH₂ and CH₃).

### Example B22:

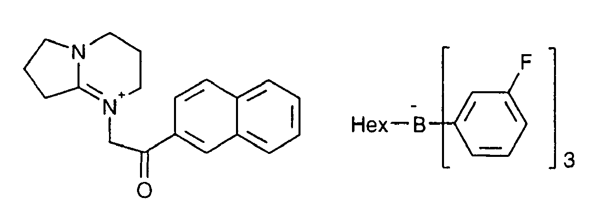

U.V. (CHCl₃) max. at 256 nm (ε 55600), 298 nm (ε 11400) and 346 nm (ε 2400).
¹H NMR (CDCl₃): 8.21 (1H, s, ArH), 8.01 (1H, d, ArH), 7.90 (2H, m, ArH), 7.81 (1H, d, ArH), 7.64 (2H, m, ArH), 7.21 (3H, m, ArH), 6.94 (6H, m, ArH), 6.49 (3H, m, ArH), 4.16 (2H, s, CH₂), 3.44 (2H, t, NCH₂), 3.06 (2H, t, NCH₂), 2.87 (2H, t, NCH₂), 2.14 (2H, t, CH₂), 2.0-1.7 (4H, m, CH₂) and 1.3-0.7 (13H, m, CH₂ and CH₃).

### Example B23:

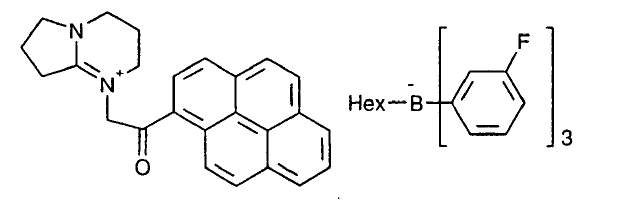

U.V. (CHCl₃) max. at 246 nm (ε 34800), 292 nm (ε 24100), 371 nm (ε 18500) and 404 nm (ε 15800).
¹H NMR (CDCl₃): 9.16 (1H, d, ArH), 8.3-7.9 (8H, m, ArH), 7.3-6.8 (9H, m, ArH), 6.50 (3H, m, ArH), 4.32 (2H, s, CH₂), 3.36 (2H, t, NCH₂), 3.01 (2H, t, NCH₂), 2.91 (2H, t, NCH₂), 2.18 (2H, t, CH₂), 2.0-1.7 (4H, m, CH₂) and 1.3-0.6 (13H, m, CH₂ and CH₃).

### Example B24

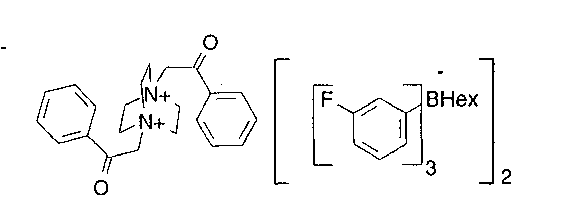

¹H NMR (CD₃COCD₃): 8.00 (4H, d, ArH), 7.77 (2H, t, ArH), 7.60 (4H, t, ArH), 7.34 (16H, m, ArH), 6.93 (16H, m, ArH), 6.78 (8H, m, ArH), 5.63 (2H, s, CH₂) and 4.69 (12H, m, NCH₂), 7.22 (3H, d, ArH), 6.99 (6H, m, ArH), 6.53 (3H, m, ArH), 3.78 (2H, s, CH₂), 2.99 (6H, q, CH₂CH₃) and 1.4-0.7 (22H, m, CH₂ and CH₃).

### Example B25

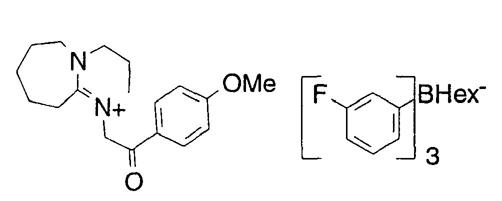

¹ H NMR (CDCl₃): 7.47 (2H, d, ArH), 7.0-6.4 (14H, m, ArH), 4.04 (2H, s, CH₂), 3.69 (3H, s, OCH₃), 3.16 (2H, m, CH₂), 3.00 (3H, m, CH₂), 2.85 (1 H, m, CH₂), 2.62 (2H, m, CH₂), 1.91 (2H, m, CH₂) and 1.7-0.6 (19H, m, CH₂).

### Example B26

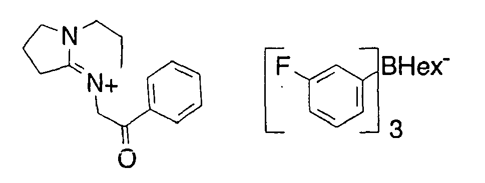

U.V. (CHCl₃) max. at 247 nm (s 24100).
¹ H NMR (CDCl₃): 7.62 (3H, m, ArH), 7.44 (2H, m, ArH), 7.05 (3H, m, ArH), 6.86 (6H, m, ArH), 6.42 (3H, m, ArH), 3.97 (2H, s, CH₂), 2.62 (2H, t, NCH₂), 2.50 (2H, t, NCH₂), 2.33 (2H, t, NCH₂), 1.74 (2H, t, CH₂), 1.29 (2H, m, CH₂) and 1.15 (2H, m, CH₂).

### Example B27

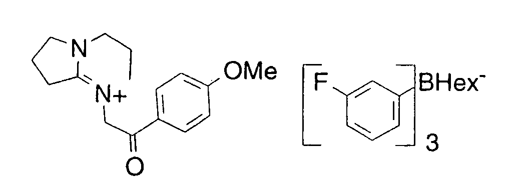

¹H NMR (CDCl₃): 7.62 (2H, d, ArH), 7.08 (3H, m, ArH), 6.86 (8H, m, ArH), 6.42 (3H, m, ArH), 3.96 (2H, s, CH₂), 3.81 (3H, s, OCH₃), 3.30 (2H, t, CH₂), 2.94 (2H, t, CH₂), 2.75 (2H, t, CH₂), 2.03 (2H, t, CH₂), 1.76 (4H, m, CH₂) and 1.3-0.6 (13H, m, CH₂ and CH₃).

### Preparation of tetra(3-methylphenyl)borate salt

One equivalent of the bromides is stirred into dimethylformamide at room temperature and one equivalent of a solution of cesium tetrakis(3-methylphenyl)borate in dimethylformamide is added. The precipitated tetrakis(3-methylphenyl)borate salt is isolated by filtration, washed several times with water and dried under vacuum.

### Example B28

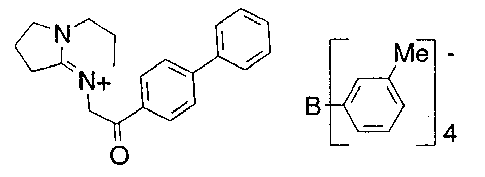

U.V. (CHCl₃) max. at 245 nm (ε 17200) and 298 nm (ε 23000).
¹H NMR (CDCl₃): 7.57 (5H, m, ArH), 7.43 (4H, m, ArH), 7.31 (4H, m, ArH), 7.21 (4H, m, ArH), 6.77 (4H, t, ArH), 6.57 (4H, d, ArH), 3.51 (2H, s, CH₂), 3.02 (2H, t, CH₂), 2.64 (2H, t, CH₂), 2.49 (2H, t, CH₂), 2.05 (12H, s, CH₃) and 1.7-1.4 (9H, m, CH₃).

### Example B29:

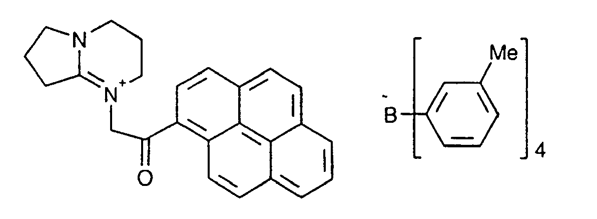

¹H NMR (CDCl₃): 9.16 (1H, d, ArH), 8.38 (1 H, d, ArH), 8.28-8.03 (7H, m, ArH); 7.44 (4H, m, ArH), 7.21 (4H, m, ArH), 7.77 (4H, t, ArH), 6.57 (4H, d, ArH), 3.51 (2H, s, CH₂), 3.02 (2H, t, CH₂), 3.64 (2H, t, CH₂), 2.49 (2H, t, CH₂), 2.05 (12H, s, CH₃) and 1.7-1.4 (9H, m, CH₃).

### Example B30:

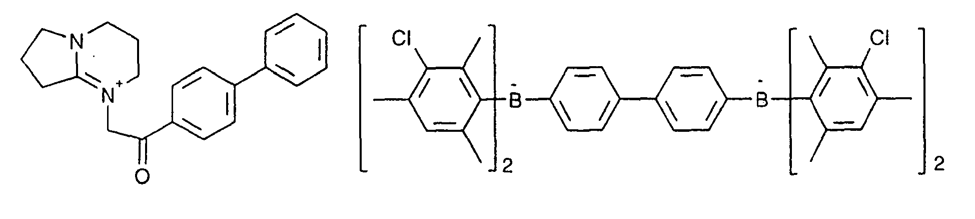

U.V. (CHCl₃) max. at 245 nm (ε 31900) and 305 nm (ε 41800).
¹H NMR (CDCl₃): 7.71-7.31 (20H, m, ArH), 6.86-6.57 (6H, m, ArH), 3.88 (2H, s, CH₂), 3.24 (2H, t, CH₂), 2.87 (2H, t, CH₂), 2.62 (2H, t, CH₂), 2.05 (12H, s, CH₃) and 2.4-1.5 (42H, m, CH₂ and CH₃).

### Application Examples C

### Process for UV-initiated Michael addition with dimethylmalonate and n-butylacrylate

The latent base (7.4x10⁻⁵ mol) and 2,2,6,6-tetramethyl-1-piperidinyloxyl (7.4x10⁻⁵ mol) are dissolved in a 1:1 mixture of dimethylmalonate and n-butylacrylate (200 mg, 7.4x10⁻⁴ mol). This mixture is irradiated in a silica flask using a high-pressure mercury vapour lamp (200 watt) at a distance of 30 cm. After a certain time, the reaction is measured.

### Example C1

A compound of Example B13 is used. After a 2 hours exposure to light, a 55% reaction is found, and after 6 hours 100% are reacted.

### Example C2

A compound of Example B30 is used. Crosslinking is achieved by exposure to visible light.

### Use Examples D

### Base-catalysis with-oligomeric/polymeric compounds

### Example D1

### · Preparation of urethane acrylate based on isophoronediisocyanate and 4-hydroxybutylacrylate.

The reaction is carried out under nitrogen and all commercially available chemicals employed are used without further purification. 1566.8 g (13.78 mol NCO) of isophoronediisocyanate, 2.3 g of dibutyltin dilaurate, 2.3 g of 2,5-ditertiary-butyl-p-cresol and 802.8 g of butylacetate are placed in a three-necked flask equipped with condenser and dropping funnel. Dry nitrogen is made to bubble through the reaction mixture and the temperature is slowly raised to 60°C. Subsequently, 1987 g (13.78 mol) of 4-hydroxybutylacrylate are added, the reaction solution slowly heating to 80°C. The temperature is kept at 80°C and the dropping funnel is rinsed with butylacetate (86.6 g). The reaction is observed via titration of the residual amount of isocyanate and is terminated when the isocyanate content is less than 0.2%, based on the solid. The reaction product obtained has the following physical properties:
Residual amount of 4-hydroxybutylacrylate: < 0.002%, based on the solid (HPLC analysis), colour: << Gardner 1,
viscosity: 43 cPa s (20°C),
solid: 79.3% (1 hour at 140°C),
GPC data (polystyrene standard), Mₙ 778, M_{w} 796, d=1.02.

### . Preparation of a malonate polyester

The reaction is carried out under nitrogen and all commercially available chemicals employed are used without further purification.
In a reaction vessel equipped with stirrer and condenser, 1045 g of 1.5 pentanediol, 1377.4 g of diethylmalonate and 242.1 g of xylene are carefully refluxed. The maximum temperature of the reaction mixture is 196°C while the temperature is kept at 79°C at the head of the condenser. 862 g of ethanol are thus isolated by distillation, corresponding to a 97.7% reaction. Xylene is then stripped off under vacuum at a temperature of 200°C. The polymer so obtained has 98.6% solid content, a viscosity of 2710 mmPa s and an acid number of 0.3 mg KOH/g, based on the solid. Mₙ is 1838, M_{w} is 3186, the colour is 175 on the APHA scale (process of the American Public Health Association; "Hazen colour unit"; ISO 6271).

### Curing with UV radiation

6.4 10⁻⁵ Mol of the photoinitiator of Example B28 are dissolved in a 1:1 mixture of the above urethane acrylate and the malonate polyester (400 mg total amount). This mixture is cast on a glass plate to a 50 µm film and is irradiated using a high-pressure mercury vapour lamp (200 W) at a distance of 30 cm. The film is tack-free after 30 minutes.

## Claims

1. A compound of formula (I) 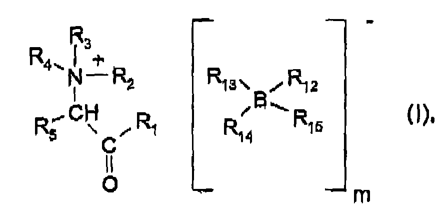 wherein
**m** is 1 or 2 and corresponds to the number of positive charges of the cation;
**R₁** is phenyl, naphthyl, pyrenyl, thioxanthyl or phenothiazinyl, which radicals are unsubstituted or mono- or polysubstituted by C₁-C₁₈alkyl, C₁-C₁₈haloalkyl, NR₆R₇, CN, NO₂, SR₆ or OR₈;
**R₂**. **R₃**, **R₄** are each independently of one another C₁-C₁₈alkyl, or together with the nitrogen atom, are a group of the structural formula (a), (b), (c), (d) or (e) 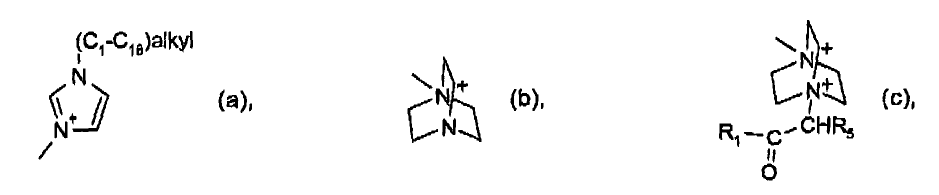 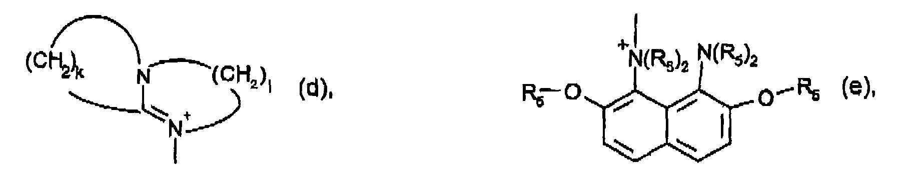 wherein
**k** and **l** are each independently of the other a number from 2 to 12;
**R₅**, **R₆**, **R₇** and **R₈** are hydrogen or C₁-C₁₈alkyl;
**R₁₂**, **R₁₃**, **R₁₄** are phenyl, biphenylyl, naphthyl, anthracyl or phenanthryl, which radicals are unsubstituted or mono- or polysubstituted by C₁-C₁₈alkyl, C₁-C₁₈haloalkyl, NO₂, OH, CN, OR₈, or halogen; and
**R₁₅** is C₁-C₁₈alkyl or phenyl which is unsubstituted or mono- or polysubstituted by C₁-C₁₈alkyl, C₁-C₁₈haloalkyl, NO₂, OH, CN, OR₈ or halogen,
provided that,
If R₁₂, R₁₃, R₁₄ and R₁₅ simultaneously are phenyl,
(a) R₂, R₃ and R₄ are not simultaneously methyl; and
(b) R₂, R₃ and R₄ together are no

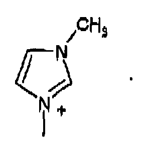

2. A process for the preparation of a compound of formula I, which comprises reacting In a first step a nitrogenous base of formula II
NR₂R₃R₄ (II)
with an α- halogen ketone of formula III 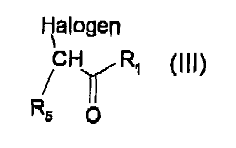 to a compound of formula IV 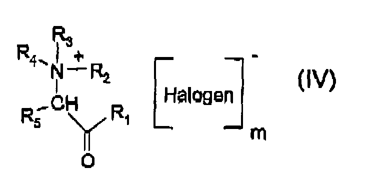 and, in a second step, reacting the compound of formula IV with a compound of formula V 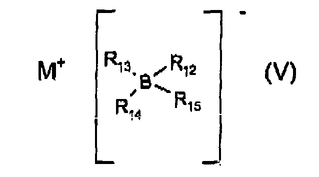 to the compound of formula I, wherein halogen is bromo or iodo, and M is Na, K or ammonium, and R₁, R₂, R₃, R₄, R₅, R₁₂, R₁₃, R₁₄ and R₁₅ have the meanings claimed in claim 1.

3. A composition, which comprises
A) at least one compound of formula (I), and
B) at least one organic compound which is capable of a base-catalysed addition reaction or substitution reaction.

4. A composition according to claim 3, wherein component B) is an anionically polymerisable or crosslinkable organic material,

5. A composition according to claim 3, wherein component B) is one of the following systems:
a) an acrylate copolymer having alkoxysilane or alkoxysiloxane side groups,
b) a two-component system comprising a hydroxyl group-containing polyacrylate and/or polyester and an aliphatic or aromatic polyisocyanate,
c) a two-component system comprising a functional polyacrylate and a polyepoxide, where the polyacrylate contains carboxyl or anhydride groups,
d) a two-component system comprising a fluorine-modified or silicone-modified hydroxyl group-containing polyacrylate or polyester and an aliphatic or aromatic polyisocyanate,
e) a two-component system comprising a (poly)ketimine and an aliphatic or aromatic polylsocyanate,
f) a two-component system comprising a (poly)ketimlne and an unsaturated acrylate resin or an acetoacetate resin or methyl α-acrylamidomethylglycolate,
h) a two-component system comprising a (poly)oxazolidine and a polyacrylate containing anhydride groups, or an unsaturated acrylate resin or a polyisocyanate,
i) a two-component system comprising an epoxy group-containing polyacrylate and a carboxyl group-containing polyacrylate,
l) a polymer based on allyl glycidyl ether,
m) a two-component system comprising a (poly)alcohol and a (poly)Isocyanate,
n) a two-component system comprising an α,β-ethylenically unsaturated carbonyl compound and a compound which contains activated CH₂ groups.

6. A composition according to claim 3, wherein component B) is one of the following systems:
b) a two-component system comprising a hydroxyl group-containing polyacrylate and/or polyester and an aliphatic or aromatic polyisocyanate,
c) a two-component system comprising a functional polyacrylate and a polyepoxlde, where the polyacrylate contains carboxyl or anhydride groups,
i) a two-component system comprising an epoxy group-containing polyacrylate and a carboxyl group-containing polyacrylate,
m) a two-component system comprising a (Poly)alcohol and a (poly)isocyanate, and
n) a two-component system comprising an α,β-ethylenically unsaturated carbonyl compound and a compound which contains activated CH₂ groups.

7. A composition according to claim 3, wherein component B is an epoxy resin or a mixture of different epoxy resins,

8. A composition according to claim 3, wherein component A) is present in an amount of 0.01 to 10 % by weight, based on component B).

9. A composition according to claim 3, which additionally comprises a sensitiser selected from the group consisting of thioxanthones, oxazines, acridines, phenazines and rhodamines.

10. A process for carrying out base-catalysed reactions, which comprises exposing a composition according to claim 3 with light having a wavelength in the range from 200 nm to 650 nm.

11. A process according to claim 10, which comprises heating the composition before or after the exposure to light.

12. Use of an organic compound according to claim 1 as photoinitiator for photochemically induced base-catalysed addition reactions or substitution reactions.

13. Use of an organic compound according to claim 1 for the preparation of coatings, moulding compositions or photostructured layers.

14. A coated substrate, which is coated on at least one surface with a composition as claimed in claim 3.

15. A polymerised or crosslinked composition according to claim 3.

## Patentansprüche

1. Verbindungen der Formel (1) 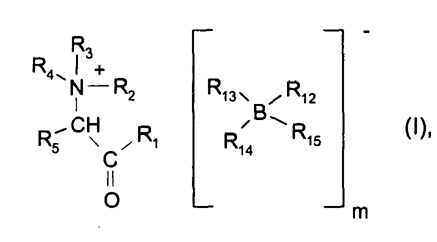 worin
**m** 1 oder 2 ist und die Anzahl der positiven Ladungen des Kations darstellt;
**R₁** ist Phenyl, Naphthyl, Pyrenyl, Thioxanthyl oder Phenothiazinyl, wobei diese Reste unsubstituiert oder mit C₁-C₁₈Alkyl, C₁-C₁₈Haloalkyl, NR₆R₇, CN, NO₂, SR₈ oder OR₈ mono-oder polysubstitutiert sind;
**R₂, R₃, R₄** jeweils unabhängig voneinander C₁-C₁₈Alkyl darstellen, oder zusammen mit dem Stickstoffatom eine Gruppe der Strukturformel (a), (b), (c), (d) oder (e) bedeuten 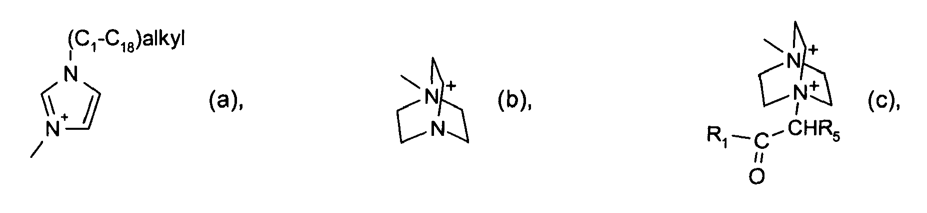 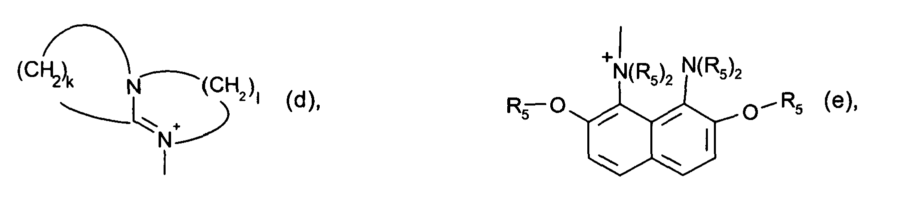 worin
**k** und **l** unabhängig voneinander eine Nummer von 2 bis 12 bedeuten;
**R₅, R₆, R₇** ud **R₈** Wasserstoff oder C₁-C₁₈Alkyl darstellen;
**R_{12,} R₁₃, R₁₄** Phenyl, Biphenylyl, Naphthyl, Anthracyl oder Phenanthryl darstellen, wobei diese Reste unsubstituiert oder mit C₁-C₁₈Alkyl, C₁-C₁₈ Haloalkyl, NO₂, OH, CN, OR₈ oder Halogen mono- oder polysubstituiert sind; und
**R₁₅** C₁-C₁₈Alkyl oder Phenyl welches unsubstituiert oder mit C₁-C₁₈Alkyl, C₁-C₁₈Haloalkyl, NO₂, OH, CN, OR₈ oder Halogen mono- oder polysubstituiert ist, darstellt;
Mit der Massgabe, dass,
wenn R₁₂, R₁₃, R₁₄ und R₁₅ gleichzeitig Phenyl bedeuten,
(a) R₂, R₃ und R₄ nicht alle gleichzeitig Methyl sind; und
(b) R₂, R₃ und R₄ zusammen kein 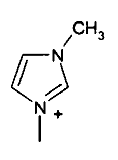 darstellen.

2. Verfahren zur Herstellung von Verbindungen der Formel I, **dadurch gekennzeichnet, dass** in einem ersten Schritt eine Stickstoffbase der Formel 11
NR₂R₃R₄ (II)
mit einem α- Halogenketon der Formel III 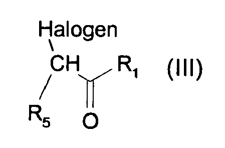 zu einer Verbindung der Formel IV 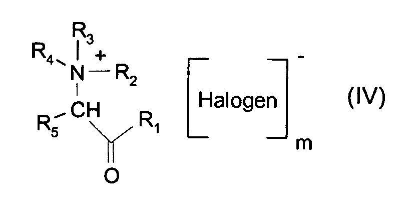 umgesetzt wird, und in einem zweiten Schritt die Verbindung der Formel IV mit einer Verbindung der Formel V 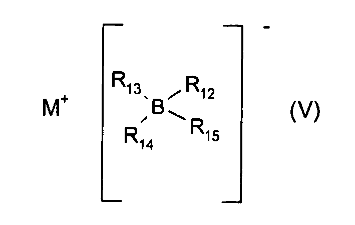 zur Verbindung der Formel I umgesetzt wird, worin Halogen Brom oder lod bedeutet und M Na, K oder Ammonium ist und die Reste R₁, R₂, R₃, R₄, R₅, R₁₂, R₁₃, R₁₄ und R₁₅ die in Anspruch 1 angegebenen Bedeutungen haben.

3. Zusammensetzung, enthaltend
A) mindestens eine Verbindung der Formel (1) und
B) mindestens eine organische Verbindung, welche zu einer basenkatalysierten Additions-oder Substitutionsreaktion befähigt ist.

4. Zusammensetzung nach Anspruch 3, worin die Komponente B) ein anionisch polymerisierbares oder vernetzbares organisches Material ist.

5. Zusammensetzung nach Anspruch 5, worin die Komponente B) eines der folgenden Systeme bedeutet:
a) ein Acrylatcopolymer mit Alkoxysilan- bzw. Alkoxysiloxan-Seitengruppen,
b) ein Zweikomponentensystem aus einem hydroxylgruppenhaltigen Polyacrylat und/oder Polyester und einem aliphatischen oder aromatischen Polyisocyanat,
c) ein Zweikomponentensystem aus einem funktionellen Polyacrylat und einem Polyepoxid, wobei das Polyacrylat Carboxyl- oder Anhydridgruppen enthält,
d) ein Zweikomponentensystem aus einem fluormodifizierten oder siliconmodifizierten hydroxylgruppenhaltigen Polyacrylat oder Polyester und einem aliphatischen oder aromatischen Polyisocyanat,
e) ein Zweikomponentensystem aus einem (Poly)ketimin und einem aliphatischen oder aromatischen Polyisocyanat,
f) ein Zweikomponentensystem aus einem (Poly)ketimin und einem ungesättigten Acrylatharz oder einem Acetoacetatharz oder Methyl-α-acrylamido-methylglykolat,
h) ein Zweikomponentensystem aus einem (Poly)oxazolidin und einem anhydridgruppenhaltigen Polyacrylat oder einem ungesättigten Acrylatharz oder einem Polyisocyanat,
i) ein Zweikomponentensystem aus einem epoxygruppenhaltigen Polyacrylat und einem carboxylgruppenhaltigen Polyacrylat,
l) ein Polymeres auf Basis von Allyl-glycidylether.
m) ein Zweikomponentensystem aus einem (Poly)alkohol und einem (Poly)isocyanat,
n) ein Zweikomponentensystem aus einer α,β-ethylenisch ungesättigten Carbonylverbindung und einer Verbindung mit aktivierten CH₂-Gruppen.

6. Zusammensetzung nach Anspruch 3, worin die Komponente B) eines der folgenden Systeme bedeutet:
b) ein Zweikomponentensystem aus einem hydroxylgruppenhaltigen Polyacrylat und/oder Polyester und einem aliphatischen oder aromatischen Polyisocyanat,
c) ein Zweikomponentensystem aus einem funktionellen Polyacrylat und einem Polyepoxid, wobei das Polyacrylat Carboxyl- oder Anhydridgruppen enthält,
i) ein Zweikomponentensystem aus einem epoxygruppenhaltigen Polyacrylat und einem carboxylgruppenhaltigen Polyacrylat,
m) ein Zweikomponentensystem aus einem (Poly)alkohol und einem (Poly)isocyanat,
n) ein Zweikomponentensystem aus einer a, b - ethylenisch ungesättigten Carbonylverbindung und einer Verbindung mit aktivierten CH₂-Gruppen.

7. Zusammensetzung nach Anspruch 3, worin die Komponente B ein Epoxidharz oder ein Gemisch aus verschiedenen Epoxidharzen ist.

8. Zusammensetzung nach Anspruch 3, worin die Komponente A) in einer Menge von 0,01 bis 10 Gew.-%, bezogen auf die Komponente B), enthalten ist

9. Zusammensetzung nach Anspruch 3, welche zusätzlich einen Sensibilisator enthält, der aus der Gruppe Thioxanthone, Oxazine, Acridine, Phenazine oder Rhodamine ausgewählt ist.

10. Verfahren zur Durchführung basenkatalysierter Reaktionen, **dadurch gekennzeichnet dass** eine Zusammensetzung nach Anspruch 3 mit Licht einer Wellenlänge von 200 nm bis 650 nm bestrahlt wird.

11. Verfahren nach Anspruch 10, **dadurch gekennzeichnet, dass** während oder nach der Belichtung erwärmt wird.

12. Verwendung einer organischen Verbindung nach Anspruch 1 als Photoinitiator für photochemisch induzierte basenkatalysierte Additions- oder Substitutionsreaktionen.

13. Verwendung einer organischen Verbindung nach Anspruch 1 zur Herstellung von Beschichtungen, Formmassen oder photostrukturierten Schichten.

14. Beschichtetes Substrat, das auf mindestens einer Oberfläche mit einer Zusammensetzung nach Anspruch 3 beschichtet ist.

15. Polymerisierte oder vernetzte Zusammensetzung nach Anspruch 3.

## Revendications

1. Composé de formule (I) 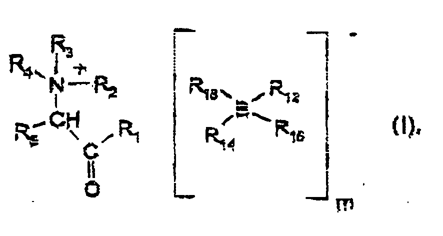 où
**m** vaut 1 ou 2 et correspond au nombre de charges positives du cation,
**R₁** représente un groupe phényle, naphtyle, pyrényle, thioxanthyle ou phénothiazinyle, lesquels radicaux sont non substitués ou mono- ou polysubstitués par des substituants alkyle en C₁-C₁₈. haloalkyle en C₁-C₁₈, NR₆R₇, CN, NO₂ , SR₈ ou OR₈;
**R₂**, **R₃**, **R₄**, indépendamment les uns des autres, représentent chacun un groupe alkyle en C₁-C₁₈, ou conjointement avec l'atome d'azote représentent un groupe de formule développée (a), (b), (c), (d) ou (e) 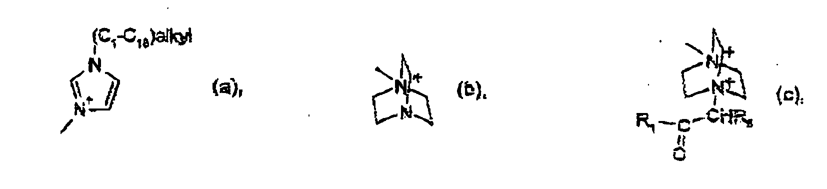 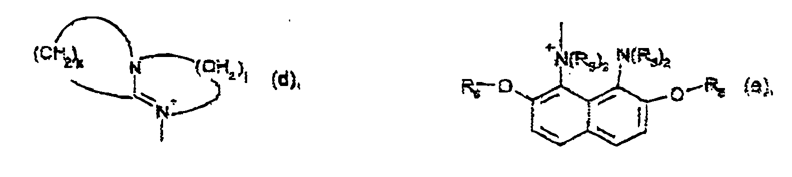 où
**k** et **l**, indépendamment l'un de l'autre, sont un nombre de 2 à 12 ;
**R₅, R₆, R₇** et **R₈** représentent un atome d'hydrogène ou un groupe alkyle en C₁-C₁₈ ;
**R₁₂, R₁₃, R₁₄** représentent un groupe phényle, biphénylyle, naphtyle, anthracyle ou phénanthryle, lesquels radicaux sont non substitués ou mono- ou polysubstitués par un substituant alkyle en C₁-C₁₈, haloalkyle en C₁-C₁₈, NO₂, OH, CN, OR₈ ou halogène ; et
R₁₅ représente un groupe alkyle en C₁-C₁₈ ou phényle qui est non substitué ou mono- ou polysubstitué par un substituant alkyle en C₁-C₁₈, haloalkyle en C₁-C₁₈, NO₂; OH, CN, OR₈ ou halogène,
à condition que,
si R₁₂, R₁₃, R₁₄ et R₁₅ représentent simultanément un groupe phényle,
(a) **R₂, R₃** et **R₄** représentent simultanément un groupe méthyle
(b) **R₂, R₃** et **R₄** conjointement ne représentent pas

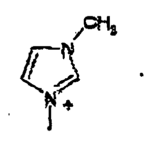

2. Procédé pour la préparation d'un composé de formule I, qui comprend, dans une première étape, la réaction d'une base azotée de formule II
NR₈R₃R₄ (II)
avec une α-halogénocétone de formule III 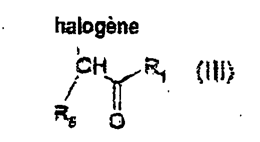 en un composé de formule IV 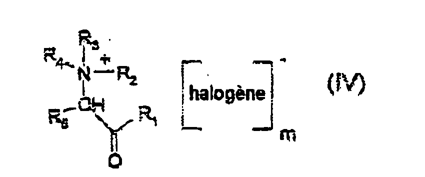 et, dans une seconde étape, la réaction du composé de formule IV avec un composé de formule V 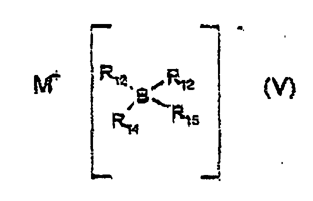 en le composé de formule I, où l'halogène est bromo ou iodo, et M représente Na, K ou ammonium, et R₁, R₂, R₃, R₄, R₅, R₁₂, R₁₃, R₁₄ et R₁₅ ont les significations revendiquées dans la revendication 1.

3. Composition qui comprend
A) au moins un composé de formule (I), et
B) au moins un composé organique qui est capable d'une réaction d'addition ou d'une réaction de substitution catalysée par une base.

4. Composition selon la revendication 3, où le composant B) est une matière organique polymérisable anioniquement ou réticulable.

5. Composition selon la revendication 3, où le composant B) est un des systèmes suivants :
a) un copolymère acrylate ayant des groupes latéraux alkoxysilane ou alkoxysiloxane,
b) un système à deux composants comprenant un polyacrylate et/ou polyester contenant des groupes hydroxyle et un polyisocyanate aliphatique ou aromatique,
c) un système à deux composants comprenant un polyacrylate fonctionnel et un polyépoxyde, où le polyacrylate contient des groupes carboxyle ou anhydride,
d) un système à deux composants comprenant un polyacrylate ou polyester contenant des groupes hydroxyle modifié par du fluor ou modifié par du silicium, et un polyisocyanate aliphatique ou aromatique,
e) un système à deux composants comprenant une (poly)cétimine et un polyisocyanate aliphatique ou aromatique,
f) un système à deux composants comprenant une (poly)cétimine et une résine acrylate insaturée ou une résine acétoacétate ou un α-acryl-amidométhylglycolate de méthyle,
h) un système à deux composants comprenant une (poly)oxazolidine et un polyacrylate contenant des groupes anhydride ou une résine acrylate insaturée ou un polyisocyanate,
i) un système à deux composants comprenant un polyacrylate contenant des groupes époxy et un polyacrylate contenant des groupes carboxyle,
l) un polymère à base d'éther allylglycidylique,
m) un système à deux composant comprenant un (poly)alcool et un (poly)isocyanate,
n) un système à deux composant comprenant un composé carbonylé à insaturation α,β-éthylénique et un composé qui contient des groupes CH₂ actives.

6. Composition selon la revendication 3, où le composant B) est un des systèmes suivants :
b) un système à deux composants comprenant un polyacrylate et/ou polyester contenant des groupes hydroxyle et un polyisocyanate aliphatique ou aromatique,
c) un système à deux composants comprenant un polyacrylate fonctionnel et un polyépoxyde, où le polyacrylate contient des groupes carboxyle ou anhydride,
i) un système à deux composants comprenant un polyacrylate contenant des groupes époxy et un polyacrylate contenant des groupes carboxyle,
m) un système à deux composant comprenant un (poly) alcool et un (poly)isocyanate, et
n) un système à deux composant comprenant un composé carbonylé à insaturation α,β-éthylénique et un Composé qui contient des groupes CH₂ activés.

7. Composition selon la revendication 3, où le composant B est une résine époxy ou un mélange de différentes résines époxy.

8. Composition selon la revendication 3, où le composant A) est présent dans une quantité allant de 0,01 à 10 % en poids, sur la base du composant B).

9. Composition selon la revendication 3, qui comprend de plus un agent sensibilisant choisi dans le groupe constitué par des thioxanthones, oxazines, acridines, phénazines et rhodamines.

10. Procédé pour la mise en oeuvre de réactions catalysées par une base, qui comprend l'exposition d'une composition selon la revendication 3 à une lumière ayant une longueur d'onde dans le domaine de 200 nm à 650 nm.

11. Procédé selon la revendication 10, qui comprend le chauffage de la composition avant ou après l'exposition à la lumière.

12. Utilisation d'un composé organique selon la revendication 1, en tant que photoamorceur pour des réactions d'addition ou des réactions de substitution catalysées par une base, induites photochimiquement.

13. Utilisation d'un composé organique selon la revendication 1, pour la préparation de revêtements, de compositions de moulage ou de couches photostructurées.

14. Substrat revêtu, qui est revêtu sur au moins une surface d'une composition comme revendiquée dans la revendication 3.

15. Composition polymérisée ou réticulée selon la revendication 3.
